(19) Europäisches Patentamt

European Patent Office

Office européen des brevets

(11) **EP 4 087 224 B1**

(12) **EUROPEAN PATENT SPECIFICATION**

(45) Date of publication and mention
of the grant of the patent:
**26.03.2025 Bulletin 2025/13**

(21) Application number: **20922242.1**

(22) Date of filing: **10.11.2020**

(51) International Patent Classification (IPC):
*H04M 1/72454* (2021.01)        *G09G 3/34* (2006.01)
*H04M 1/22* (2006.01)

(52) Cooperative Patent Classification (CPC):
**G09G 3/3406; H04M 1/72454;** G09G 2320/0606;
G09G 2320/0653; G09G 2320/066; G09G 2354/00;
G09G 2360/144; H04M 1/22

(86) International application number:
**PCT/CN2020/127802**

(87) International publication number:
**WO 2021/169402 (02.09.2021 Gazette 2021/35)**

(54) **SCREEN BRIGHTNESS ADJUSTMENT METHOD AND ELECTRONIC DEVICE**

VERFAHREN ZUR EINSTELLUNG DER BILDSCHIRMHELLIGKEIT UND ELEKTRONISCHE
VORRICHTUNG

PROCÉDÉ DE RÉGLAGE DE LUMINOSITÉ D'ÉCRAN ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2020  CN 202010121169**

(43) Date of publication of application:
**09.11.2022  Bulletin 2022/45**

(73) Proprietor: **Huawei Technologies Co., Ltd.
Shenzhen, Guangdong 518129 (CN)**

(72) Inventor: **ZHANG, Xiufeng
Shenzhen, Guangdong 518129 (CN)**

(74) Representative: **Maiwald GmbH
Elisenhof
Elisenstraße 3
80335 München (DE)**

(56) References cited:
WO-A1-2019/165934      CN-A- 106 205 557
CN-A- 106 210 311      CN-A- 106 448 616
CN-A- 110 417 999      US-A1- 2013 082 993
US-A1- 2013 328 842

## Description

### TECHNICAL FIELD

This application relates to the terminal field, and in particular, to a screen brightness adjustment method and an electronic device.

### BACKGROUND

With popularity of electronic devices (for example, smartphones), portability of the electronic devices makes use scenarios of the electronic devices more complex and changeable. Due to diversity of use scenarios of the electronic devices, conventional automatic brightness algorithms are gradually unable to meet user requirements. Brightness adjustment of mobile phones becomes a hardest hit area for complaints about experience.

US2013/328842A1 describes that automatic display brightness adjustments may be made by an electronic device based on ambient light sensor data. It is described that proximity sensor data from a light-based proximity sensor, from nearby capacitive sensor electrodes in a touch screen, or from other proximity sensing components may be used to determine whether the ambient light sensor is being shadowed by a hand or other external object. It is described that ambient light sensor data associated with blocked sensor conditions can be suppressed. It is described that a transient event filter may be used to remove spikes from ambient light sensor data. It is described that a display brightness baseline may be adaptively adjusted. It is described that short changes in ambient light level may result in corresponding momentary adjustments to display brightness. It is described that longer changes in ambient light level may be associated with persistent changes in the display brightness baseline.

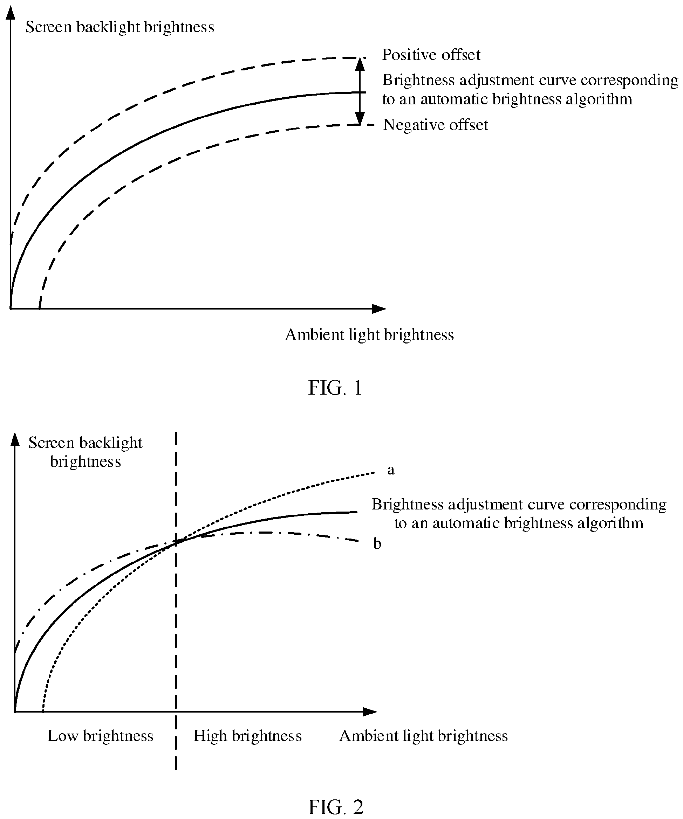

According to the conventional automatic brightness algorithms, when a value of an ambient light sensor is within a specific interval, a screen brightness is adjusted to a value corresponding to the interval. For example, when the value of the ambient light sensor is 800, it is determined through table search that the value of the ambient light sensor is within an interval of [400, 1000) and a corresponding value of the screen brightness is 70. Further, as shown in FIG. 1, if a user manually adjusts the screen brightness on a basis of a specific ambient light brightness, a system uses a manual adjustment increment or decrement of the user as a global offset (the global offset may be a positive offset or a negative offset), and biases screen backlight brightnesses under all ambient light brightnesses. This easily causes a problem of repeated adjustment in bright and dark environments (for example, in the daytime and at night).

For example, the user adjusts a brightness bar in the daytime to obtain a satisfactory brightness. However, although the brightness is reduced at night based on an automatic brightness algorithm, user experience may still be uncomfortable. Therefore, the user needs to adjust the brightness bar again. In the next daytime, the screen brightness is affected by the adjustment performed the previous night and still cannot meet the user's requirements in the daytime. In this case, the user performs repeated adjustment under different ambient light brightnesses, which brings a lot of inconvenience.

### SUMMARY

Embodiments of this application provide a screen brightness adjustment method and an electronic device, to avoid frequent brightness adjustment performed by a user, and improve user experience.

Appended claim 1 defines a screen brightness adjustment method. Appended claim 6 defines a screen brightness adjustment apparatus. Appended claim 11 defines a computer-readable storage medium. The invention and its scope of protection is defined by these claims. The following aspects and implementations of the disclosure provide examples of combinations of technical subject matters.

According to a first aspect, an embodiment of this application provides a screen brightness adjustment method that is applied to an electronic device, including: obtaining an ambient light brightness in a first display scenario, where the first display scenario includes any one of a text reading scenario, a video scenario, or a game scenario; determining a screen backlight brightness in the first display scenario based on the ambient light brightness and a first brightness adjustment rule, where the first brightness adjustment rule is determined based on at least two different ambient light brightnesses in the first display scenario, manually-adjusted screen brightnesses corresponding to the at least two different ambient light brightnesses, and a preset automatic brightness algorithm; and adjusting a screen brightness of the electronic device based on the screen backlight brightness in the first display scenario.

It may be understood that the first brightness adjustment rule is determined based on the at least two different ambient light brightnesses (bright and dark environments, for example, daytime and night) in the first display scenario (for example, a text reading scenario), the manually-adjusted brightnesses corresponding to the at least two different ambient light brightnesses, and the preset automatic brightness algorithm. Therefore, different brightness requirements in bright and dark environments can be better adapted, so that a problem of inconsistent brightness experience caused by different bright and dark environments in the first display scenario can be resolved, and a user does not need to frequently adjust a brightness bar, thereby improving user experience.

In a possible design, the method further includes: if a variation of the ambient light brightness is less than or equal to a first threshold, when the first display scenario is switched to a second display scenario, determining a screen backlight brightness in the second display scenario based on the ambient light brightness and a second brightness adjustment rule, where the second display scenario includes any one of a text reading scenario, a video scenario, or a game scenario, and the second display scenario is different from the first display scenario; and the second brightness adjustment rule is determined based on at least two different ambient light brightnesses in the second display scenario, manually-adjusted screen brightnesses corresponding to the at least two different ambient light brightnesses in the second display scenario, and the preset automatic brightness algorithm.

In this way, in a case of a comparatively small change in the ambient light brightness (approximately to an unchanged ambient light brightness), when a mobile phone switches from the first display scenario (for example, a text reading scenario) to the second display scenario (for example, a video playing scenario), the mobile phone may determine the screen backlight brightness in the second display scenario based on the ambient light brightness and the second brightness adjustment rule, so that a problem of inconsistent brightness requirements under approximate ambient light brightnesses in different application scenarios can be resolved, and the user does not need to frequently adjust the brightness bar, thereby improving user experience.

In a possible design, an absolute value of a difference between the at least two different ambient light brightnesses in the first display scenario is greater than a second threshold.

In this way, the at least two different ambient light brightnesses in the first display scenario can be prevented from being infinitely close, and accuracy of the first brightness adjustment rule that is determined based on the at least two different ambient light brightnesses, the manually-adjusted screen brightnesses corresponding to the at least two different ambient light brightnesses, and the preset automatic brightness algorithm can be improved, so that the first brightness adjustment rule can better adapt to (satisfy) the user's different brightness requirements in bright and dark environments.

In a possible design, the at least two different ambient light brightnesses in the first display scenario and the manually-adjusted screen brightnesses corresponding to the at least two different ambient light brightnesses in the first display scenario fall within different ambient light brightness intervals in N non-overlapping ambient light brightness intervals, where N is an integer greater than or equal to 3.

In a possible design, the method further includes: in the first display scenario, separately recording an ambient light brightness within each of three non-overlapping ambient light brightness intervals, and a manually-adjusted screen brightness corresponding to the ambient light brightness, including [Lu 0, Eu 0], [Lu m, Eu m], and [Lu 1, Eu 1], where: Eu 0 is an ambient light brightness within a first ambient light brightness interval, and Lu 0 is a manually-adjusted screen brightness corresponding to Eu 0; Eu m is an ambient light brightness within a second ambient light brightness interval, and Lu m is a manually-adjusted screen brightness corresponding to Eu m; and Eu 1 is an ambient light brightness within a third ambient light brightness interval, and Lu 1 is a manually-adjusted screen brightness corresponding to Eu 1. If the record of [Lu m, Eu m] is the latest record, when an absolute value of (Eu m-Eu 1) is greater than an absolute value of (Eu m-Eu 0), the at least two different ambient light brightnesses in the first display scenario and the manually-adjusted screen brightnesses corresponding to the at least two different ambient light brightnesses in the first display scenario include [Lu m, Eu m] and [Lu 1, Eu 1]; or when an absolute value of (Eu m-Eu 1) is less than an absolute value of (Eu m-Eu 0), the at least two different ambient light brightnesses in the first display scenario and the manually-adjusted screen brightnesses corresponding to the at least two different ambient light brightnesses in the first display scenario include [Lu m, Eu m] and [Lu 0, Eu 0]. If the record of [Lu 0, Eu 0] or [Lu 1, Eu 1] is the latest record, the at least two different ambient light brightnesses in the first display scenario and the manually-adjusted screen brightnesses corresponding to the at least two different ambient light brightnesses in the first display scenario include [Lu 0, Eu 0] and [Lu 1, Eu 1].

In this way, the at least two different ambient light brightnesses in the first display scenario can be prevented from being infinitely close, and accuracy of the first brightness adjustment rule that is determined based on the at least two different ambient light brightnesses, the manually-adjusted screen brightnesses corresponding to the at least two different ambient light brightnesses, and the preset automatic brightness algorithm can be improved, so that the first brightness adjustment rule can better adapt to (satisfy) the user's different brightness requirements in bright and dark environments.

In a possible design, the first brightness adjustment rule meets the following formula:

$$L = gain \times f(E) + offset,$$

where
E represents an ambient light brightness in the first display scenario, f(x) represents a preset automatic brightness algorithm, f(E) represents an automatic brightness corresponding to E, L represents a screen backlight brightness obtained based on the first brightness adjustment rule in the first display scenario, and gain and offset meet the following formulas:

$$L\,1 = gain \times f(Eu\,1) + offset;$$

and

$$L\,2 = gain \times f(Eu\,2) + offset,$$

where

f(x) represents a preset automatic brightness algorithm; Eu 1 represents a first ambient light brightness in the at least two different ambient light brightnesses in the first display scenario, f(Eu 1) represents an automatic brightness corresponding to Eu 1, and L 1 represents a manually-adjusted screen brightness corresponding to Eu 1; and Eu 2 represents a second ambient light brightness in the at least two different ambient light brightnesses in the first display scenario, f(Eu 2) represents an automatic brightness corresponding to Eu 2, and L 2 represents a manually-adjusted screen brightness corresponding to Eu 2.

According to a second aspect, an embodiment of this application provides a screen brightness adjustment apparatus, including: a sensor, configured to obtain an ambient light brightness in a first display scenario, where the first display scenario includes any one of a text reading scenario, a video scenario, or a game scenario; and a processing unit, configured to determine a screen backlight brightness in the first display scenario based on the ambient light brightness and a first brightness adjustment rule, where the first brightness adjustment rule is determined based on at least two different ambient light brightnesses in the first display scenario, manually-adjusted screen brightnesses corresponding to the at least two different ambient light brightnesses, and a preset automatic brightness algorithm, and the processing unit is further configured to adjust a screen brightness of an electronic device based on the screen backlight brightness in the first display scenario.

In a possible design, the processing unit is further configured to: if a variation of the ambient light brightness is less than or equal to a first threshold, when the first display scenario is switched to a second display scenario, determine a screen backlight brightness in the second display scenario based on the ambient light brightness and a second brightness adjustment rule, where the second display scenario includes any one of a text reading scenario, a video scenario, or a game scenario, and the second display scenario is different from the first display scenario; and the second brightness adjustment rule is determined based on at least two different ambient light brightnesses in the second display scenario, manually-adjusted screen brightnesses corresponding to the at least two different ambient light brightnesses in the second display scenario, and the preset automatic brightness algorithm.

In a possible design, an absolute value of a difference between the at least two ambient light brightnesses in the first display scenario is greater than a second threshold.

In a possible design, the at least two different ambient light brightnesses in the first display scenario and the manually-adjusted screen brightnesses corresponding to the at least two different ambient light brightnesses in the first display scenario fall within different ambient light brightness intervals in N non-overlapping ambient light brightness intervals, where N is an integer greater than or equal to 3.

In a possible design, the processing unit is further configured to: in the first display scenario, separately record an ambient light brightness within each of three non-overlapping ambient light brightness intervals, and a manually-adjusted screen brightness corresponding to the ambient light brightness, including [Lu 0, Eu 0], [Lu m, Eu m], and [Lu 1, Eu 1], where: Eu 0 is an ambient light brightness within a first ambient light brightness interval, and Lu 0 is a manually-adjusted screen brightness corresponding to Eu 0; Eu m is an ambient light brightness within a second ambient light brightness interval, and Lu m is a manually-adjusted screen brightness corresponding to Eu m; and Eu 1 is an ambient light brightness within a third ambient light brightness interval, and Lu 1 is a manually-adjusted screen brightness corresponding to Eu 1. If the record of [Lu m, Eu m] is the latest record, when an absolute value of (Eu m-Eu 1) is greater than an absolute value of (Eu m-Eu 0), the at least two different ambient light brightnesses in the first display scenario and the manually-adjusted screen brightnesses corresponding to the at least two different ambient light brightnesses in the first display scenario include [Lu m, Eu m] and [Lu 1, Eu 1]; or when an absolute value of (Eu m-Eu 1) is less than an absolute value of (Eu m-Eu 0), the at least two different ambient light brightnesses in the first display scenario and the manually-adjusted screen brightnesses corresponding to the at least two different ambient light brightnesses in the first display scenario include [Lu m, Eu m] and [Lu 0, Eu 0]. If the record of [Lu 0, Eu 0] or [Lu 1, Eu 1] is the latest record, the at least two different ambient light brightnesses in the first display scenario and the manually-adjusted screen brightnesses corresponding to the at least two different ambient light brightnesses in the first display scenario include [Lu 0, Eu 0] and [Lu 1, Eu 1].

In a possible design, the first brightness adjustment rule meets the following formula:

$$L = gain \times f(E) + offset,$$

where

E represents an ambient light brightness in the first display scenario, f(x) represents a preset automatic brightness algorithm, f(E) represents an automatic brightness corresponding to E, L represents a screen backlight brightness obtained based on the first brightness adjustment rule in the first display scenario, and gain and offset meet the following formulas:

$$L\,1=gain\times f(Eu\,1)+offset;$$

and

$$L\,2=gain\times f(Eu\,2)+offset,$$

where

f(x) represents a preset automatic brightness algorithm; Eu 1 represents a first ambient light brightness in the at least two different ambient light brightnesses in the first display scenario, f(Eu 1) represents an automatic brightness corresponding to Eu 1, and L 1 represents a manually-adjusted screen brightness corresponding to Eu 1; and Eu 2 represents a second ambient light brightness in the at least two different ambient light brightnesses in the first display scenario, f(Eu 2) represents an automatic brightness corresponding to Eu 2, and L 2 represents a manually-adjusted screen brightness corresponding to Eu 2.

According to a third aspect, an embodiment of this application provides a computer readable storage medium that includes instructions. When the instructions are run on a computer, the computer is enabled to perform any method provided in the first aspect.

According to a fourth aspect, an embodiment of this application provides a computer program product that includes instructions. When the instructions are run on a computer, the computer is enabled to perform any method provided in the first aspect.

According to a fifth aspect, an embodiment of this application provides a chip system. The chip system includes a processor, and may further include a memory. The chip system is configured to implement any method provided in the first aspect. The chip system may include a chip, or may include a chip and another discrete device.

According to a sixth aspect, an embodiment of this application further provides a screen brightness adjustment apparatus. The apparatus may be a processing device, an electronic device, or a chip. The apparatus includes a processor, configured to implement any method provided in the first aspect. The apparatus may further include a memory, configured to store program instructions and data. The memory may be a memory integrated in the apparatus, or an off-chip memory disposed outside the apparatus. The memory is coupled to the processor, and the processor may invoke and execute the program instructions stored in the memory, to implement any method provided in the first aspect. The apparatus may further include a communications interface, and the communications interface is used by the apparatus to communicate with another device.

## BRIEF DESCRIPTION OF DRAWINGS

FIG. 1 is a schematic diagram of a brightness adjustment curve in the prior art;
FIG. 2 is a schematic diagram of a brightness adjustment curve according to an embodiment of this application;
FIG. 3 is a schematic structural diagram of an electronic device according to an embodiment of this application;
FIG. 4 is a schematic flowchart applicable to a screen brightness adjustment method according to an embodiment of this application;
FIG. 5 is a schematic display diagram of an electronic device according to an embodiment of this application;
FIG. 6(a) and FIG. 6(b) are a schematic display diagram of still another electronic device according to an embodiment of this application;
FIG. 7 is a schematic diagram of still another brightness adjustment curve according to an embodiment of this application;
FIG. 8 is a schematic diagram of still another brightness adjustment curve according to an embodiment of this application;
FIG. 9 is a schematic structural diagram of still another electronic device according to an embodiment of this application; and
FIG. 10 is a schematic structural diagram of a chip system according to an embodiment of this application.

## DESCRIPTION OF EMBODIMENTS

The following describes the technical solutions in the embodiments of this application with reference to the accompanying drawings in the embodiments of this application. In the description of this application, unless otherwise specified, "at least one" means one or more, and "a plurality of" means two or more. In addition, to clearly describe the technical solutions in the embodiments of this application, words such as "first" and "second" are used in the embodiments of this application to distinguish between same items or similar items whose functions and roles are basically the same. A person skilled in the art may understand that the words such as "first" and "second" do not limit a quantity and an execution sequence, and the words such as "first" and "second" do not limit that items are definitely different, either.

At present, a conventional automatic brightness algorithm is obtained based on experimental data of a large quantity of users, and does not meet personalized requirements of different types of users. For example, as shown in FIG. 2, young people with better eyesight (line a) have a high contrast requirement and are sensitive to a brightness. They require a higher screen backlight brightness in a high-light environment, and require a lower screen backlight brightness in a low-light environment. Elderly people with degraded eyesight (line b) have a low contrast requirement and are insensitive to a brightness. A difference between screen backlight brightnesses required in a high-light environment and a low-light environment is significantly reduced. However, the conventional automatic brightness algorithm cannot meet the foregoing requirements.

In addition, a large quantity of experiments prove that, even under same or similar ambient light brightnesses, the users have different brightness requirements if display scenarios are different. For example, in a text reading scenario such as a web page, a chat, or an e-book, a user has a lower brightness requirement. In a video scenario, because an average brightness of video content is lower, a user usually has a higher brightness requirement. In a game scenario, because game content is darker and complex, a user usually requires a higher brightness so that the user can find an opponent in a game in time and achieve a better record. The conventional automatic brightness algorithm cannot meet the foregoing requirements either.

To resolve the foregoing problem, an embodiment of this application provides a screen brightness adjustment method that is applied to an electronic device. The method includes: obtaining an ambient light brightness in a first display scenario, where the first display scenario includes any one of a text reading scenario, a video scenario, or a game scenario; then determining a screen backlight brightness in the first display scenario based on the ambient light brightness and a first brightness adjustment rule; and finally adjusting a screen brightness of the electronic device based on the screen backlight brightness in the first display scenario. The first brightness adjustment rule is determined based on at least two different ambient light brightnesses in the first display scenario, manually-adjusted brightnesses corresponding to the at least two different ambient light brightnesses, and a preset automatic brightness algorithm.

It may be understood that the first brightness adjustment rule is determined based on the at least two different ambient light brightnesses (bright and dark environments, for example, daytime and night) in the first display scenario (for example, a text reading scenario), the manually-adjusted screen brightnesses corresponding to the at least two different ambient light brightnesses, and the preset automatic brightness algorithm. Therefore, different brightness requirements in the bright and dark environments can be better adapted, so that a problem of inconsistent brightness experience caused by different bright and dark environments in the first display scenario can be resolved, and a user does not need to frequently adjust a brightness bar, thereby improving user experience.

For example, the electronic device in this embodiment of this application may be a mobile phone, a tablet computer, a desktop computer, a laptop computer, a handheld computer, a notebook computer, an ultra-mobile personal computer (ultra-mobile personal computer, UMPC), a netbook, a smart TV, a smart screen, or a device such as a cellular phone, a personal digital assistant (personal digital assistant, PDA), or an augmented reality (augmented reality, AR)/virtual reality (virtual reality, VR) device. A specific form of the electronic device is not specially limited in this embodiment of this application.

The following describes the implementations of the embodiments of this application in detail with reference to accompanying drawings.

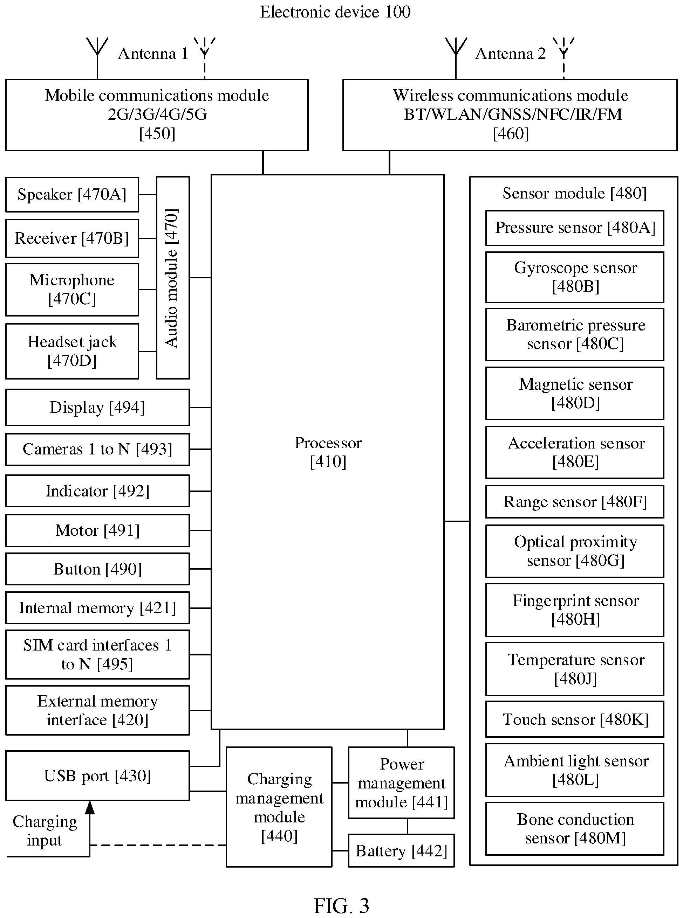

FIG. 3 is a schematic structural diagram of an electronic device 100 according to an embodiment of this application. As shown in FIG. 3, the electronic device 100 may include a processor 410, an external memory interface 420, an internal memory 421, a universal serial bus (universal serial bus, USB) port 430, a charging management module 440, a power management module 441, a battery 442, an antenna 1, an antenna 2, a mobile communications module 450, a wireless communications module 460, an audio module 470, a speaker 470A, a receiver 470B, a microphone 470C, a headset jack 470D, a sensor module 480, a button 490, a motor 491, an indicator 492, a camera 493, a display 494, a subscriber identification module (subscriber identification module, SIM) card interface 495, and the like. The sensor module 480 may include a pressure sensor 480A, a gyroscope sensor 480B, a barometric pressure sensor 480C, a magnetic sensor 480D, an acceleration sensor 480E, a range sensor 480F, an optical proximity sensor 480G, a fingerprint sensor 480H, a temperature sensor 480J, a touch sensor 480K, an ambient light sensor 480L, a bone conduction sensor 480M, and the like.

It can be understood that a structure shown in the embodiments does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural processing unit (Neural-network Processing Unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 410, and is configured to store an instruction and data. In some embodiments, the memory in the processor 410 is a cache memory. The memory may store an instruction or data that is just used or cyclically used by the processor 410. If the processor 410 needs to use the instruction or the data again, the processor 410 may directly invoke the instruction or the data from the memory, to avoid repeated access and reduce a waiting time of the processor 410, thereby improving system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It can be understood that an interface connection relationship between the modules shown in the embodiments is merely an example for description, and does not constitute a limitation on the structure of the electronic device 100. In some other embodiments of this application, the electronic device 100 may alternatively use an interface connection manner that is different from that in the foregoing embodiment, or a combination of a plurality of interface connection manners.

The charging management module 440 is configured to receive a charging input from the charger. The charger may be a wireless charger or a wired charger. In some embodiments of wired charging, the charging management module 440 may receive a charging input of a wired charger through the USB port 430. In some embodiments of wireless charging, the charging management module 440 may receive a wireless charging input through a wireless charging coil of the electronic device 100. The charging management module 440 may further supply power to the electronic device through the power management module 441 while charging the battery 442.

The power management module 441 is configured to connect to the battery 442, the charging management module 440, and the processor 410. The power management module 441 receives an input of the battery 442 and/or the charging management module 440, and supplies power to the processor 410, the internal memory 421, an external memory, the display 494, the camera 493, the wireless communications module 460, and the like. The power management module 441 may be further configured to monitor parameters such as a battery capacity, a battery cycle count, and a battery health status (electric leakage or impedance). In some other embodiments, the power management module 441 may alternatively be disposed in the processor 410. In some other embodiments, the power management module 441 and the charging management module 440 may alternatively be disposed in a same device.

A wireless communication function of the electronic device 100 may be implemented through the antenna 1, the antenna 2, the mobile communications module 450, the wireless communications module 460, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be further multiplexed, to increase antenna utilization. For example, the antenna 1 may be multiplexed as a diversity antenna of a wireless local area network. In some other embodiments, the antenna may be used in combination with a tuning switch.

The mobile communications module 450 can provide a solution, applied to the electronic device 100, to wireless communication including 2G/3G/4G/5G, and the like. The mobile communications module 450 may include at least one filter, a switch, a power amplifier, a low noise amplifier (low noise amplifier, LNA), and the like. The mobile communications module 450 may receive an electromagnetic wave through the antenna 1, perform processing such as filtering or amplification on the received electromagnetic wave, and transfer the electromagnetic wave to the modem processor for demodulation. The mobile communications module 450 may further amplify a signal modulated by the modem processor, and convert an amplified signal into an electromagnetic wave through the antenna 1 for radiation. In some embodiments, at least some function modules in the mobile communications module 450 may be disposed in the processor 410. In some embodiments, at least some function modules in the mobile communications module 450 may be disposed in a same device as at least some modules in the processor 410.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 470A, the receiver 470B, or the like), or displays an image or a video through the display 494. In some embodiments, the modem processor may be an independent device. In some other embodiments, the modem processor may be independent of the processor 410, and is disposed in a same device as the mobile communications module 450 or another function module.

The wireless communications module 460 may provide a solution, applied to the electronic device 100, to wireless communication including a wireless local area network (wireless local area networks, WLAN) (for example, a Wi-Fi network), Bluetooth (Bluetooth, BT), a global navigational satellite system (global navigation satellite system, GNSS), frequency modulation (frequency modulation, FM), near field communication (near field communication, NFC), an infrared (infrared, IR) technology, and the like. The wireless communications module 460 may be one or more devices integrating at least one communication processing module. The wireless communications module 460 receives an electromagnetic wave through the antenna 2, performs frequency modulation and filtering processing on an electromagnetic wave signal, and sends a processed signal to the processor 410. The wireless communications module 460 may further receive a to-be-sent signal from the processor 410, perform frequency modulation and amplification on the signal, and convert a processed signal into an electromagnetic wave through the antenna 2 for radiation.

In some embodiments, in the electronic device 100, the antenna 1 is coupled to the mobile communications module 450, and the antenna 2 is coupled to the wireless communications module 460, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-code division multiple access (time-division code division multiple access, TD-SCDMA), long term evolution (long term evolution, LTE), BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The electronic device 100 implements the display function through the GPU, the display 494, the application processor, and the like. The GPU is a microprocessor for image processing, and is connected to the display 494 and the application processor. The GPU is configured to perform mathematical and geometric calculation, and perform graphics rendering. The processor 410 may include one or more GPUs, which execute a program instruction to generate or change display information.

The display 494 is configured to display an image, a video, and the like.

The display 494 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), mini-LED, a micro-LED, a micro-OLED, a quantum dot light emitting diode (quantum dot light emitting diodes, QLED), or the like.

The electronic device 100 may implement the photographing function through the ISP, the camera 493, the video codec, the GPU, the display 494, the application processor, and the like.

The ISP is configured to process data fed back by the camera 493. For example, during photographing, a shutter is pressed, light is transmitted to a photosensitive element of the camera through a lens. The photosensitive element of the camera converts an optical signal into an electrical signal, and transmits the electrical signal to the ISP for processing. The ISP converts the electrical signal into an image that is visible to the eye. The ISP may further perform algorithm optimization on noise, luminance, and complexion of the image. The ISP may further optimize parameters such as exposure and a color temperature of a photographing scenario. In some embodiments, the ISP may be disposed in the camera 493.

The camera 493 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP. The ISP converts the electrical signal into a digital image signal, and outputs the digital image signal to the DSP for processing. The DSP converts the digital image signal into a standard image signal in a format such as RGB or YUV. In some embodiments, the electronic device 100 may include one or N cameras 493, where N is a positive integer greater than 1.

The digital signal processor is configured to process a digital signal. In addition to the digital image signal, the digital signal processor may further process another digital signal. For example, when the electronic device 100 selects a frequency, the digital signal processor is configured to perform Fourier transform on frequency energy, and the like.

The video codec is configured to compress or decompress a digital video. The electronic device 100 may support one or more codecs. Therefore, the electronic device 100 may play or record videos in a plurality of encoding formats, for example, MPEG (moving picture experts group, MPEG)-1, MPEG-2, MPEG-3, and MPEG-4.

The NPU is a neural-network (neural-network, NN) computing processor. The NPU quickly processes input information by referring to a biological neural network structure, for example, by referring to a mode of transfer between human brain neurons, and may further continuously perform self-learning. Intelligent cognition of the electronic device 100 such as image recognition, facial recognition, speech recognition, and text understanding can be implemented by using the NPU.

The external memory interface 420 may be configured to connect to an external memory card such as a micro SD card, to extend a storage capability of the electronic device 100. The external memory card communicates with the processor 410 through the external memory interface 420, to implement a data storage function, for example, to store files such as music and a video in the external memory card.

The internal memory 421 may be configured to store computer-executable program code. The executable program code includes an instruction. The processor 410 runs the instruction stored in the internal memory 421, to implement various function applications and data processing of the electronic device 100. For example, in the embodiments of this application, the processor 410 may execute the instruction stored in the internal memory 421, to display corresponding display content in the display 494 in response to a second operation or a first operation of a user in the display 494. The internal memory 421 may include a program storage area and a data storage area. The program storage area may store an operating system, an application required by at least one function (for example, a sound playing function and an image playing function), and the like. The data storage area may store data (such as audio data and a phone book) created when the electronic device 100 is used, and the like. In addition, the internal memory 421 may include a high-speed random access memory, or may include a nonvolatile memory, for example, at least one magnetic disk storage device, a flash memory, or a universal flash storage (universal flash storage, UFS).

The electronic device 100 may implement audio functions such as music playback and recording functions through the audio module 470, the speaker 470A, the receiver 470B, the microphone 470C, the headset jack 470D, the application processor, and the like.

The audio module 470 is configured to convert digital audio information into an analog audio signal for output, and is also configured to convert an analog audio input into a digital audio signal. The audio module 470 may be further configured to perform audio signal encoding and decoding. In some embodiments, the audio module 470 may be disposed in the processor 410, or some function modules in the audio module 470 are disposed in the processor 410. The speaker 470A, also referred to as a "horn", is configured to convert an audio electrical signal into a sound signal. The electronic device 100 may listen to music or answer a hands-free call through the speaker 470A. The receiver 470B, also referred to as an "earpiece", is configured to convert an audio electrical signal into a sound signal. When the electronic device 100 answers a call or receives a voice message, the receiver 470B may be put close to a human ear to listen to the voice message. The microphone 470C, also referred to as a "mike" or a "microphone", is configured to convert a sound signal into an electrical signal. When making a call or sending a voice message, a user may make a sound near the microphone 470C through the mouth of the user, to enter a sound signal to the microphone 470C. At least one microphone 470C may be disposed in the electronic device 100. In some other embodiments, two microphones 470C may be disposed in the electronic device 100, to collect a sound signal and further implement a noise reduction function. In some other embodiments, three, four, or more microphones 470C may alternatively be disposed in the electronic device 100, to collect a sound signal, reduce noise, identify a sound source, implement a directional recording function, and the like.

The headset jack 470D is configured to connect to a wired headset. The headset jack 470D may be the USB port 430, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 480A is configured to sense a pressure signal, and can convert the pressure signal into an electrical signal. In some embodiments, the pressure sensor 480A may be disposed in the display 494. There are many types of pressure sensors 480A, for example, a resistive pressure sensor, an inductive pressure sensor, and a capacitive pressure sensor. The capacitive pressure sensor may include at least two parallel plates made of conductive materials. A capacitance between electrodes changes when force is applied to the pressure sensor 480A. The electronic device 100 determines a pressure strength based on a capacitance change. When a touch operation is performed on the display 494, the electronic device 100 detects a strength of the touch operation based on the pressure sensor 480A. The electronic device 100 may also calculate a touch position based on a detection signal of the pressure sensor 480A. In some embodiments, touch operations that are performed on a same touch position but have different touch operation strengths may correspond to different operation instructions. For example, when a touch operation whose touch operation strength is less than a first pressure threshold is performed on an icon of Messages, an instruction for viewing an SMS message is executed; or when a touch operation whose touch operation strength is greater than or equal to a first pressure threshold is performed on an icon of Messages, an instruction for creating a new SMS message is executed.

The gyroscope sensor 480B may be configured to determine a motion posture of the electronic device 100. In some embodiments, an angular velocity of the electronic device 100 around three axes (that is, axes x, y, and z) may be determined through the gyroscope sensor 480B. The gyroscope sensor 480B may be used for image stabilization during photographing. For example, when the shutter is pressed, the gyroscope sensor 480B detects an angle at which the electronic device 100 jitters, calculates, based on the angle, a distance for which a lens module needs to compensate, and allows the lens to eliminate the jitter of the electronic device 100 through a reverse motion, to implement image stabilization. The gyroscope sensor 480B may be further used in a navigation scenario and a somatic game scenario.

The barometric pressure sensor 480C is configured to measure barometric pressure. In some embodiments, the electronic device 100 calculates an altitude by using an atmospheric pressure value obtained by the barometric pressure sensor 480C through measurement, to assist in positioning and navigation.

The magnetic sensor 480D includes a Hall sensor. The electronic device 100 may detect opening and closing of a flip cover through the magnetic sensor 480D. In some embodiments, when the electronic device 100 is a clamshell phone, the electronic device 100 may detect opening and closing of a flip cover based on the magnetic sensor 480D, to set a feature such as automatic unlocking through flipping based on a detected opening or closing state of the flip cover.

The acceleration sensor 480E may detect acceleration values in various directions (usually on three axes) of the electronic device 100, and may detect a gravity value and a gravity direction when the electronic device 100 is still. The acceleration sensor 480E may be further configured to identify a posture of the electronic device, and is applied to applications such as a pedometer and switching between a landscape mode and a portrait mode.

The range sensor 480F is configured to measure a distance. The electronic device 100 may measure a distance in an infrared or a laser manner. In some embodiments, in a photographing scenario, the electronic device 100 may measure a distance through the range sensor 480F, to implement quick focusing.

The optical proximity sensor 480G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 480G, that the user holds the electronic device 100 close to the ear for a call, to automatically perform screen-off for power saving. The optical proximity sensor 480G may also be used in a smart cover mode or a pocket mode to automatically perform screen unlocking or locking.

The ambient light sensor 480L is configured to sense ambient light luminance. The electronic device 100 may adaptively adjust luminance of the display 494 based on the sensed ambient light luminance. The ambient light sensor 480L may be further configured to automatically adjust a white balance during photographing. The ambient light sensor 480L may further cooperate with the optical proximity sensor 480G to detect whether the electronic device 100 is in a pocket, to prevent an accidental touch.

The fingerprint sensor 480H is configured to collect a fingerprint. The electronic device 100 may implement fingerprint-based unlocking, application lock access, fingerprint-based photographing, fingerprint-based call answering, and the like by using a feature of the collected fingerprint.

The temperature sensor 480J is configured to detect a temperature. In some embodiments, the electronic device 100 executes a temperature processing policy by using the temperature detected by the temperature sensor 480J. For example, when the temperature reported by the temperature sensor 480J exceeds a threshold, the electronic device 100 degrades performance of the processor nearby the temperature sensor 480J, to reduce power consumption for thermal protection. In some other embodiments, when the temperature is less than another threshold, the electronic device 100 heats the battery 442, to prevent the electronic device 100 from being abnormally powered off because of a low temperature. In some other embodiments, when the temperature is less than still another threshold, the electronic device 100 boosts an output voltage of the battery 442, to prevent abnormal power-off caused by a low temperature.

The touch sensor 480K is also referred to as a "touch panel". The touch sensor 480K may be disposed in the display 494. The touch sensor 480K and the display 494 form a touchscreen. The touch sensor 480K is configured to detect a touch operation performed on or near the touch sensor 480K. The touch sensor may transfer the detected touch operation to the application processor, to determine a type of a touch event, and to provide a visual output related to the touch operation through the display 494. In some other embodiments, the touch sensor 480K may alternatively be disposed on a surface of the electronic device 100 at a position different from that of the display 494.

The bone conduction sensor 480M may obtain a vibration signal. In some embodiments, the bone conduction sensor 480M may obtain a vibration signal of a vibration bone of a human vocal-cord part. The bone conduction sensor 480M may also contact a body pulse to receive a blood pressure beating signal. In some embodiments, the bone conduction sensor 480M may alternatively be disposed in a headset. The audio module 470 may obtain a voice signal through parsing based on the vibration signal that is of the vibration bone of the vocal-cord part and that is obtained by the bone conduction sensor 480M, to implement a voice function. The application processor may parse heart rate information based on the blood pressure beating signal obtained by the bone conduction sensor 480M, to implement a heart rate detection function.

The button 490 includes a power button, a volume button, and the like. The button 490 may be a mechanical button, or may be a touch button. The electronic device 100 may receive a button input, and generate a button signal input related to a user setting and function control of the electronic device 100.

The motor 491 may generate a vibration prompt. The motor 491 may be used for an incoming call vibration prompt, or may be used for a touch vibration feedback. For example, touch operations performed on different applications (for example, photographing and audio playback) may also correspond to different vibration feedback effects. Touch operations performed on different areas on the display 494 may correspond to different vibration feedback effects of the motor 491. Different application scenarios (for example, a time reminder scenario, an information receiving scenario, an alarm clock scenario, and a game scenario) may also correspond to different vibration feedback effects. A touch vibration feedback effect may alternatively be customized.

The indicator 492 may be an indicator light, which may be configured to indicate a charging status and a power change, or may be configured to indicate a message, a missed call, a notification, and the like.

The SIM card interface 495 is configured to connect to a SIM card. The SIM card may be inserted into the SIM card interface 495 or removed from the SIM card interface 495, to implement contact with or separation from the electronic device 100. The electronic device 100 may support one or N SIM card interfaces, where N is a positive integer greater than 1. The SIM card interface 495 may support a nano-SIM card, a micro-SIM card, a SIM card, and the like. A plurality of cards may be simultaneously inserted into one SIM card interface 495. The plurality of cards may be of a same type or different types. The SIM card interface 495 may also be compatible with different types of SIM cards. The SIM card interface 495 may also be compatible with an external memory card. The electronic device 100 interacts with a network by using the SIM card, to implement functions such as calling and data communication. In some embodiments, the electronic device 100 uses an eSIM, that is, an embedded SIM card. The eSIM card may be embedded in the electronic device 100, and cannot be separated from the electronic device 100.

All methods in the following embodiments may be implemented in the electronic device 100 having the foregoing hardware structure.

For ease of understanding, the following describes in detail the screen brightness adjustment methods provided in the embodiments of this application with reference to the accompanying drawings.

In the embodiments of this application, ambient light brightness may also be replaced with ambient illuminance, ambient luminous intensity, or ambient luminous flux. This is not limited in this application. A unit of luminous flux is lumen (Lm). A unit of illuminance is lux (lux/Lx) that indicates luminous flux per unit area, that is, lumen/square meter. A unit of luminous intensity is candela (Cd) that indicates luminous flux per unit solid angle, that is lumen/solid angle (Sr). A unit of brightness is nit (nit/Nt) that indicates luminous flux per unit solid angle per unit area, that is, lumen/solid angle (Sr)/square meter.

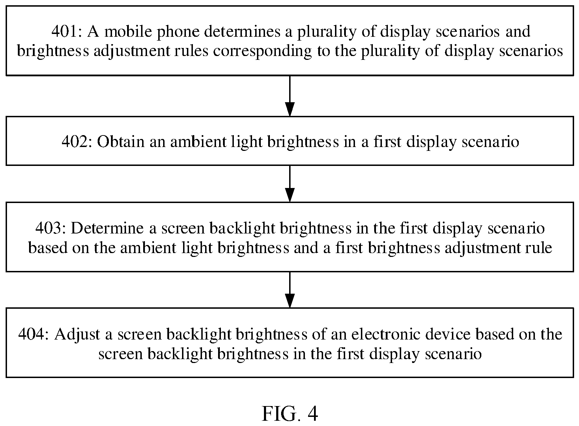

As shown in FIG. 4, an embodiment of this application provides a screen brightness adjustment method. An example in which an electronic device is a mobile phone is used for description. The method includes the following steps.

401: A mobile phone determines a plurality of display scenarios and brightness adjustment rules corresponding to the plurality of display scenarios.

For example, as shown in Table 1, the mobile phone may store a plurality of display scenarios and brightness adjustment rules corresponding to the plurality of display scenarios. The brightness adjustment rule may also be understood as a brightness adjustment algorithm or a brightness adjustment curve. This is not limited in this application.

**Table 1**

| Display scenario | Brightness adjustment rule |
| --- | --- |
| Text reading scenario | Brightness adjustment rule 1 |
| Game scenario | Brightness adjustment rule 2 |
| Video scenario | Brightness adjustment rule 3 |

The text reading scenario may include reading scenarios such as web page browsing, chatting, e-book reading, and news reading. The video scenario may include a video viewing scenario in a video playing application. The video scenario may further include a video viewing scenario in another application, for example, a video playing scenario of a video opened by using a browser, or a video playing scenario of a video opened by using social software. The game scenario may include a game scenario in a game application, a game scenario opened by using an applet preset in another application, or the like. Certainly, the mobile phone may further store more other display scenarios and brightness adjustment rules corresponding to the more other display scenarios. This is not limited herein.

The brightness adjustment rule corresponding to each display scenario is determined based on at least two different ambient light brightnesses in the display scenario, manually-adjusted screen brightnesses (referred to as manually-adjusted brightnesses in the following) corresponding to the at least two different ambient light brightnesses, and a preset automatic brightness algorithm. The preset automatic brightness algorithm may be, for example, a conventional automatic brightness algorithm. For example, it is assumed that a first display scenario is a text reading scenario, and a first brightness adjustment rule corresponding to the first display scenario is determined based on at least two different ambient light brightnesses in the text reading scenario, manually-adjusted brightnesses corresponding to the at least two different ambient light brightnesses, and a preset automatic brightness algorithm.

In other words, when the brightness adjustment rule corresponding to each display scenario is determined, for example, when a brightness adjustment rule corresponding to a text reading scenario is determined, as shown in Table 2, the following needs to be obtained: at least two different ambient light brightnesses (bright and dark environments) in the display scenario, automatic brightnesses obtained based on a preset automatic brightness algorithm under the at least two different ambient light brightnesses, and manually-adjusted brightnesses under the at least two different ambient light brightnesses (for example, the latest manual brightness adjustment record of a user under each of two different (bright and dark) ambient light brightnesses).

**Table 2**

| Text reading scenario | Ambient light brightness (lux) | Automatic brightness obtained based on a preset automatic brightness algorithm (nit) | Manually-adjusted brightness (nit) |
|---|---|---|---|
| | 10 | 5 | 3 |
| | 300 | 100 | 120 |

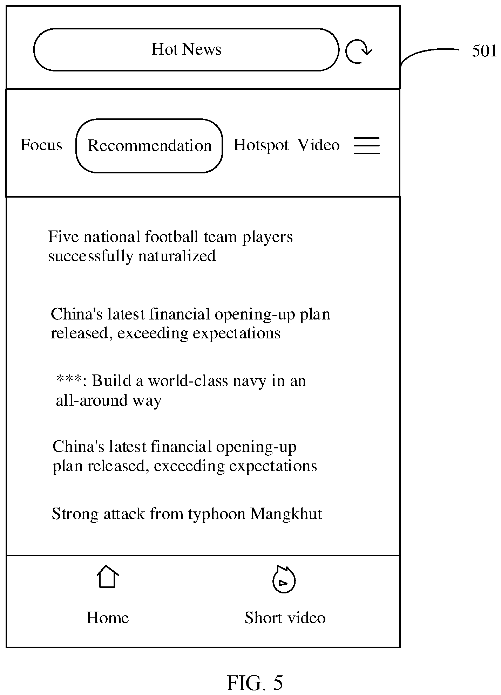

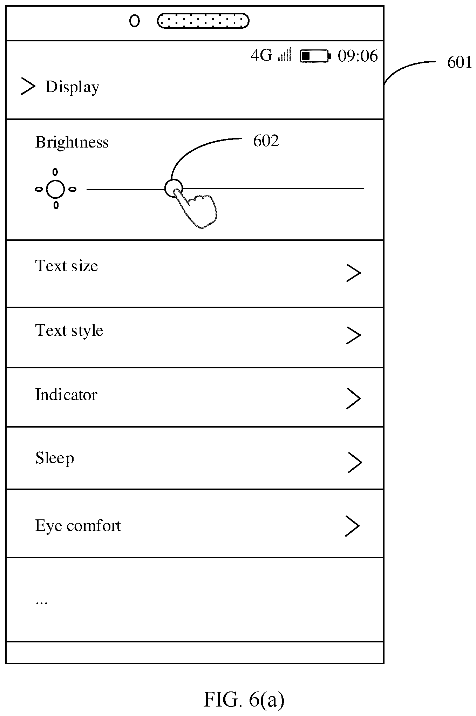

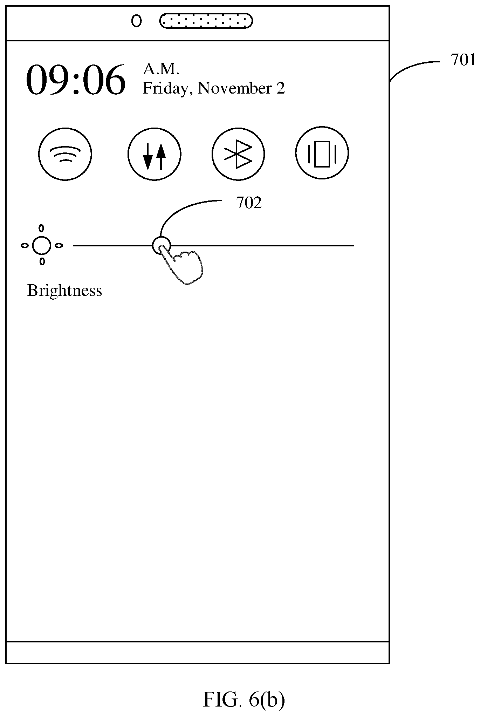

The following uses an example in which the first display scenario is a text reading scenario to describe how to obtain the manually-adjusted brightnesses corresponding to the at least two different ambient light brightnesses in the first display scenario. As shown in FIG. 5, when the user opens a hot news interface 501 of a news application program (application, APP), it is assumed that a current ambient light brightness is 10 luxes, and an automatic brightness (a default brightness of the mobile phone) obtained by the mobile phone based on a preset automatic brightness algorithm is 5 nits. If the user is not satisfied with the automatic brightness, the user may open a graphical user interface (graphical user interface, GUI) shown in FIG. 6(a) by setting the APP. The GUI may be referred to as a display interface 601. The display interface 601 may include a setting item or control related to mobile phone display, for example, a brightness, a text size, a text style, an indicator, a sleep mode, and an eye comfort mode. Certainly, the display interface 601 may display more or fewer items. This is not limited in this application. The user may drag a slider 602 of a brightness control on the display interface 601 to manually adjust a display brightness of the mobile phone. Alternatively, the user may perform a pull-down operation on a home screen to open a pull-down notification bar 701 shown in FIG. 6(b), and the user may drag a slider 702 of a brightness control in the pull-down notification bar 701 to manually adjust a display brightness of the mobile phone. For example, the user may adjust a screen brightness to 3 nits. After the user completes the adjustment, to be specific, after the user releases the slider 602 or the slider 702, the mobile phone may save a manual adjustment result of the user. Further, when the ambient light brightness changes significantly, for example, when the user moves from indoors to outdoors when reading news, and in this case, the ambient light brightness changes from 10 luxes to 300 luxes, an automatic brightness obtained by the mobile phone based on the preset automatic brightness algorithm is 100 nits. The user may still not be satisfied with the theoretical brightness, and the user may re-adjust the screen brightness. For example, the user may adjust the screen brightness to 120 nits. The mobile phone may record a manual adjustment result of the user.

In this embodiment of this application, the mobile phone may at least record latest (latest) two screen brightness adjustment results (brightness adjustment results) of the user in the text reading scenario, where the latest two brightness adjustment results are obtained under different ambient light brightnesses (for example, in a high-light environment (daytime) and a dark environment (night) separately).

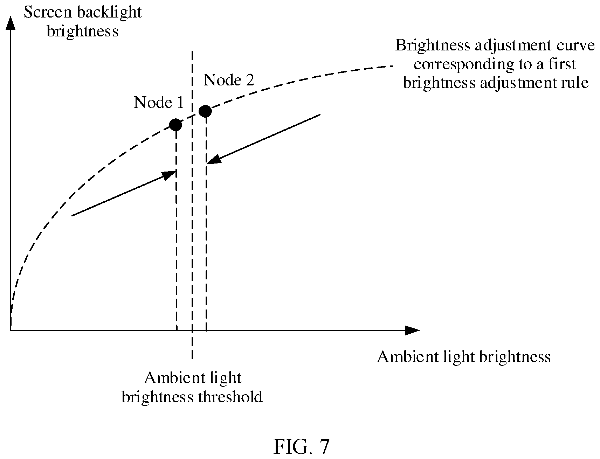

For example, an ambient light brightness threshold may be preset to distinguish between the high-light environment (bright environment) and the low-light environment (dark environment). Brightness adjustment results on two sides of the ambient light brightness threshold are separately recorded. To be specific, a brightness adjustment result obtained under an ambient illuminance greater than the ambient light brightness threshold (a brightness adjustment result in the high-light environment) and a brightness adjustment result obtained under an ambient illuminance less than the ambient light brightness threshold (a brightness adjustment result in the low-light environment) are separately recorded. The brightness adjustment result in the high-light environment and the brightness adjustment result in the low-light environment may be system default values. If the user updates the brightness adjustment result in the high-light environment or the brightness adjustment result in the low-light environment, an updated brightness adjustment result is used. That is, a brightness adjustment result obtained after a previous update performed by the user or the default brightness adjustment result is replaced with a brightness adjustment result obtained after the latest update performed by the user. It may be considered that an ambient light brightness and a manually-adjusted brightness corresponding to the ambient light brightness form a node. As shown in FIG. 7, it may be considered that two nodes (for example, a node 1 and a node 2) are distributed on the two sides of the preset ambient light brightness threshold respectively. The first brightness adjustment rule may be determined based on the node 1 and the node 2, and therefore a brightness adjustment curve corresponding to the first brightness adjustment rule is obtained. However, if the two nodes (dual nodes) are distinguished by using only one threshold, a problem that the two nodes are infinitely close, as shown in FIG. 7, may occur, thereby affecting accuracy of the brightness adjustment rule (for example, the first brightness adjustment rule) that is determined based on the two nodes.

To resolve the problem that the two nodes are infinitely close, in a possible design, it may be specified that an absolute value of a difference between the at least two different ambient light brightnesses in the first display scenario is greater than a preset threshold (a second threshold). For example, the second threshold may be 50 luxes, 100 luxes, or 200 luxes.

In another possible design, the at least two different ambient light brightnesses in the first display scenario and the manually-adjusted screen brightnesses corresponding to the at least two different ambient light brightnesses in the first display scenario may fall within different ambient light brightness intervals in N non-overlapping ambient light brightness intervals, where N is an integer greater than or equal to 3.

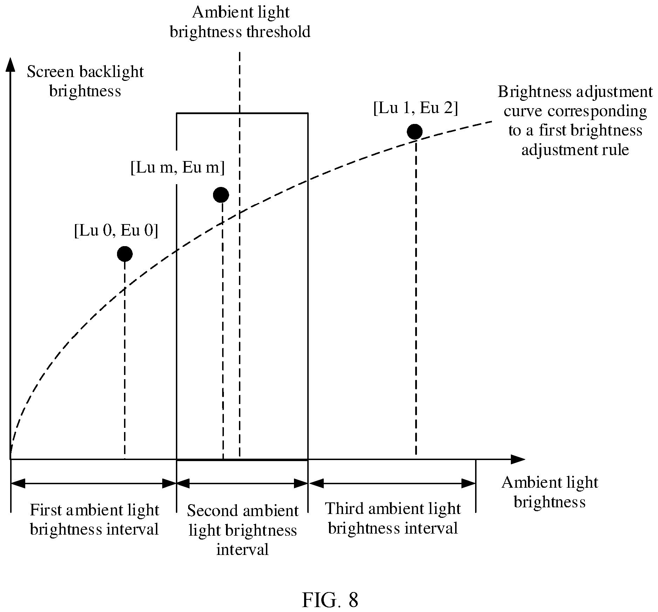

For example, three (that is, N=3) non-overlapping ambient light brightness intervals may be preset, as shown in FIG. 8. In the first display scenario (for example, a text reading scenario), an ambient light brightness within each of the three non-overlapping ambient light brightness intervals and a manually-adjusted screen brightness corresponding to the ambient light brightness are separately recorded, including [Lu 0, Eu 0], [Lu m, Eu m], and [Lu 1, Eu 1], where: Eu 0 is an ambient light brightness within a first ambient light brightness interval, and Lu 0 is a manually-adjusted screen brightness corresponding to Eu 0; Eu m is an ambient light brightness within a second ambient light brightness interval, and Lu m is a manually-adjusted screen brightness corresponding to Eu m; and Eu 1 is an ambient light brightness within a third ambient light brightness interval, and Lu 1 is a manually-adjusted screen brightness corresponding to Eu 1.

In a possible design, if the record of [Lu m, Eu m] is the latest record, when an absolute value of (Eu m-Eu 1) is greater than an absolute value of (Eu m-Eu 0), the at least two different ambient light brightnesses in the first display scenario and the manually-adjusted screen brightnesses corresponding to the at least two different ambient light brightnesses in the first display scenario include [Lu m, Eu m] and [Lu 1, Eu 1]. That is, the first brightness adjustment rule is determined based on [Lu m, Eu m] and [Lu 1, Eu 1], and therefore the brightness adjustment curve corresponding to the first brightness adjustment rule is obtained. Alternatively, when an absolute value of (Eu m-Eu 1) is less than an absolute value of (Eu m-Eu 0), the at least two different ambient light brightnesses in the first display scenario and the manually-adjusted screen brightnesses corresponding to the at least two different ambient light brightnesses in the first display scenario include [Lu m, Eu m] and [Lu 0, Eu 0]. That is, the first brightness adjustment rule is determined based on [Lu m, Eu m] and [Lu 0, Eu 0], and therefore the brightness adjustment curve corresponding to the first brightness adjustment rule is obtained. If the record of [Lu 0, Eu 0] or [Lu 1, Eu 1] is the latest record, the at least two different ambient light brightnesses in the first display scenario and the manually-adjusted screen brightnesses corresponding to the at least two different ambient light brightnesses in the first display scenario include [Lu 0, Eu 0] and [Lu 1, Eu 1]. That is, the first brightness adjustment rule is determined based on [Lu 0, Eu 0] and [Lu 1, Eu 1], and therefore the brightness adjustment curve corresponding to the first brightness adjustment rule is obtained.

In another possible design, an ambient light brightness threshold may be set within the second ambient light brightness interval. If the record of [Lu m, Eu m] is the latest record, when [Lu m, Eu m] is located on a left side of the ambient light brightness threshold, the at least two different ambient light brightnesses in the first display scenario and the manually-adjusted screen brightnesses corresponding to the at least two different ambient light brightnesses in the first display scenario include [Lu m, Eu m] and [Lu 1, Eu 2]; or when [Lu m, Eu m] is located on a right side of the ambient light brightness threshold, the at least two different ambient light brightnesses in the first display scenario and the manually-adjusted screen brightnesses corresponding to the at least two different ambient light brightnesses in the first display scenario include [Lu m, Eu m] and [Lu 1, Eu 2].

In this way, the ambient light brightnesses corresponding to the latest two brightness adjustment results respectively can be prevented from being infinitely close, that is, the dual nodes can be prevented from being infinitely close; and accuracy of the brightness adjustment rule determined based on the dual nodes can be improved, so that the brightness adjustment rule determined based on the dual nodes can better adapt to (satisfy) the user's different brightness requirements in bright and dark environments.

Then, the mobile phone may determine, based on brightnesses manually adjusted by the user and automatic brightnesses under different ambient light brightnesses in the first display scenario, the first brightness adjustment rule corresponding to the first display scenario. In a possible implementation, after the at least two different ambient light brightnesses in the first display scenario and the manually-adjusted screen brightnesses corresponding to the at least two different ambient light brightnesses in the first display scenario are determined, that is, after the dual nodes are determined, the dual nodes may be substituted into the following linear equations with two variables:

$$L\ 1 = gain \times f(Eu\ 1) + offset;$$

and

$$L\ 2 = gain \times f(Eu\ 2) + offset,$$

where

f(x) represents a preset automatic brightness algorithm; Eu 1 represents a first ambient light brightness in the at least two different ambient light brightnesses in the first display scenario, f(Eu 1) represents an automatic brightness corresponding to Eu 1, and L 1 represents a manually-adjusted screen brightness corresponding to Eu 1; and Eu 2 represents a second ambient light brightness in the at least two different ambient light brightnesses in the first display scenario, f(Eu 2) represents an automatic brightness corresponding to Eu 2, and L 2 represents a manually-adjusted screen brightness corresponding to Eu 2.

The gain parameter gain and the offset parameter offset can be obtained by solving the linear equations with two variables. The gain parameter gain and the offset parameter offset can reflect a "human factor" difference, that is, a difference in brightness requirements of different types of people. A brightness curve corresponding to the first brightness adjustment rule can be obtained based on gain and offset:

$$L = gain \times f(E) + offset,$$

where

E represents an ambient light brightness in the first display scenario, f(E) represents an automatic brightness corresponding to the ambient light brightness E, and L represents a screen backlight brightness obtained based on the first brightness adjustment rule in the first display scenario.

In addition, in some embodiments, the mobile phone may record latest M brightness adjustment results of the user in each display scenario, where M is an integer greater than or equal to 2. For example, M may be 3, 4, or 5. The mobile phone may determine, based on M different ambient light brightnesses recorded in the display scenario, manually-adjusted brightnesses corresponding to the M different ambient light brightnesses, and the preset automatic brightness algorithm, a brightness adjustment rule corresponding to the display scenario. For a determining process, refer to the foregoing related descriptions. Details are not described herein again.

402: Obtain an ambient light brightness in the first display scenario.

When a display screen of the mobile phone is in an on state, for example, when the mobile phone is in the first display scenario (the text reading scenario), the mobile phone may obtain a current ambient light brightness by using an ambient light sensor (a light source sensor).

It may be understood that the mobile phone may obtain an ambient light brightness in real time or periodically obtain an ambient light brightness. This is not limited in this application.

403: Determine a screen backlight brightness in the first display scenario based on the ambient light brightness and the first brightness adjustment rule.

After obtaining the ambient light brightness, the mobile phone may determine the screen backlight brightness in the first display scenario (for example, a text reading scenario) based on the ambient light brightness and the first brightness adjustment rule.

404: Adjust a screen backlight brightness of the electronic device based on the screen backlight brightness in the first display scenario.

In some embodiments, if a variation of the ambient light brightness is less than or equal to a preset threshold (a first threshold that may be, for example, 1 lux, 5 luxes, or 10 luxes), it may be approximately considered that the ambient light brightness remains unchanged. In this case, when the mobile phone switches from the first display scenario (for example, a text reading scenario) to a second display scenario (for example, a video playing scenario), the mobile phone may determine a screen backlight brightness in the second display scenario based on the ambient light brightness and a second brightness adjustment rule, and adjust the screen backlight brightness of the mobile phone based on the determined screen backlight brightness in the second display scenario. The second display scenario is different from the first display scenario. The second brightness adjustment rule is determined based on at least two different ambient light brightnesses in the second display scenario, manually-adjusted brightnesses corresponding to the at least two different ambient light brightnesses in the second display scenario, and the preset automatic brightness algorithm. For a method for determining the second brightness adjustment rule, refer to the related description of the method for determining the first brightness adjustment rule in step 401. Details are not described herein again.

Based on the method provided in this embodiment of this application, the mobile phone may determine the screen backlight brightness in the first display scenario based on the ambient light brightness and the first brightness adjustment rule. The first brightness adjustment rule is determined based on the at least two different ambient light brightnesses (bright and dark environments, for example, daytime and night) in the first display scenario (for example, a text reading scenario), the manually-adjusted brightnesses corresponding to the at least two different ambient light brightnesses, and the preset automatic brightness algorithm. Therefore, different brightness requirements in the bright and dark environments can be better adapted, so that a problem of inconsistent brightness experience caused by different bright and dark environments in the first display scenario can be resolved, and the user does not need to frequently adjust a brightness bar, thereby improving user experience.

Further, in a case of a comparatively small change in the ambient light brightness, when the mobile phone switches from the first display scenario (for example, a text reading scenario) to the second display scenario (for example, a video playing scenario), the mobile phone may determine the screen backlight brightness in the second display scenario based on the ambient light brightness and the second brightness adjustment rule, so that a problem of inconsistent brightness requirements under a same ambient light brightness in different application scenarios can be resolved, and the user does not need to frequently adjust the brightness bar, thereby improving user experience.

In this embodiment of this application, a "dual-node" brightness adjustment method is used. Different from a conventional brightness adjustment method in which only the latest manual brightness adjustment record of a user is recorded, in the method provided in this embodiment of this application, at least manual brightness adjustment records of the user under two different (bright and dark) ambient light brightnesses are recorded. In addition, a new brightness adjustment rule may be determined based on the manual brightness adjustment records of the user under the two different (bright and dark) ambient light brightnesses, so that problems of a "human factor" difference and an application scenario difference in brightness requirements can be resolved. Because the new brightness adjustment rule is determined based on the manual brightness adjustment records of the user in two different (bright and dark) illuminance regions, under the two different (bright and dark) ambient light brightnesses for which the user performs manual brightness adjustment, a screen display brightness of the mobile phone is still consistent with the manual brightness adjustment records of the user. In the prior art, only the latest brightness adjustment record of the user can be kept, and a plurality of brightness adjustment records (for example, latest two brightness adjustment records) cannot be restored.

Some other embodiments of this application further provide an electronic device. The electronic device is configured to perform the functions or steps performed by the mobile phone in the foregoing method embodiments.

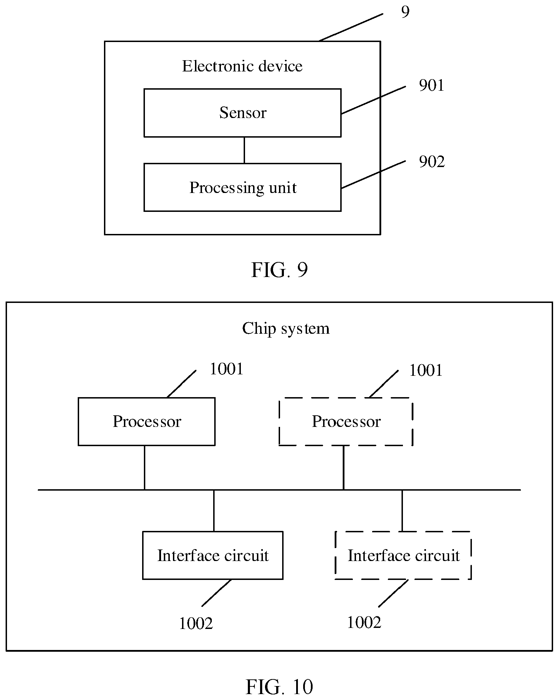

When each functional module is obtained through division for each corresponding function, FIG. 9 is a possible schematic structural diagram of the electronic device 9 in the foregoing embodiment. The electronic device 9 is configured to implement the methods recorded in the foregoing method embodiments, and specifically includes a sensor 901 and a processing unit 902.

The sensor 901 is configured to support the electronic device in performing the process 401 shown in FIG. 4. The processing unit 902 is configured to support the electronic device in performing the processes 402 to 404 shown in FIG. 4. All related content of the steps in the foregoing method embodiments may be cited in function descriptions of the corresponding functional modules, and details are not described herein again.

An embodiment of this application further provides a chip system. As shown in FIG. 10, the chip system includes at least one processor 1001 and at least one interface circuit 1002. The processor 1001 and the interface circuit 1002 may be interconnected by using a line. For example, the interface circuit 1002 may be configured to receive a signal from another apparatus (for example, a memory of the electronic device). For another example, the interface circuit 1002 may be configured to send a signal to another apparatus (for example, the processor 1001). For example, the interface circuit 1002 may read instructions stored in the memory, and send the instructions to the processor 1001. When the instructions are executed by the processor 1001, the electronic device can be enabled to perform the steps in the foregoing embodiments. Certainly, the chip system may further include another discrete component. This is not specifically limited in this embodiment of this application.

An embodiment of this application further provides a computer storage medium. The computer storage medium includes computer instructions. When the computer instructions are run on the foregoing electronic device, the electronic device is enabled to perform the functions or steps performed by the mobile phone in the foregoing method embodiments.

An embodiment of this application further provides a computer program product. When the computer program product is run on a computer, the computer is enabled to perform the functions or steps performed by the mobile phone in the foregoing method embodiments.

The foregoing descriptions about implementations allow a person skilled in the art to clearly understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A screen brightness adjustment method, carried out in an electronic device, and comprising:

   obtaining (402) an ambient light brightness in a first display scenario, wherein the first display scenario comprises any one of a text reading scenario, a video scenario, or a game scenario;
   determining (403) a screen backlight brightness in the first display scenario based on the ambient light brightness and a first brightness adjustment rule, wherein the first brightness adjustment rule is determined based on at least two different ambient light brightnesses in the first display scenario, manually-adjusted screen brightnesses corresponding to the at least two different ambient light brightnesses, and a preset automatic brightness algorithm; and
   adjusting (404) a screen brightness of the electronic device based on the screen backlight brightness in the first display scenario;
   if a variation of the ambient light brightness is less than or equal to a first threshold, when the first display scenario is switched to a second display scenario, determining a screen backlight brightness in the second display scenario based on the ambient light brightness and a second brightness adjustment rule, wherein
   the second display scenario comprises any one of a text reading scenario, a video scenario, or a game scenario, and the second display scenario is different from the first display scenario; and the second brightness adjustment rule is determined based on at least two different ambient light brightnesses in the second display scenario, manually-adjusted screen brightnesses corresponding to the at least two different ambient light brightnesses in the second display scenario, and the preset automatic brightness algorithm.

2. The screen brightness adjustment method according to claim 1, wherein
   an absolute value of a difference between the at least two different ambient light brightnesses in the first display scenario is greater than a second threshold.

3. The screen brightness adjustment method according to claim 1, wherein
the at least two different ambient light brightnesses in the first display scenario and the manually-adjusted screen brightnesses corresponding to the at least two different ambient light brightnesses in the first display scenario fall within different ambient light brightness intervals in N non-overlapping ambient light brightness intervals, wherein N is an integer greater than or equal to 3.

4. The screen brightness adjustment method according to claim 3, wherein the method further comprises:

in the first display scenario, separately recording an ambient light brightness within each of three non-overlapping ambient light brightness intervals, and a manually-adjusted screen brightness corresponding to the ambient light brightness, comprising [Lu 0, Eu 0], [Lu m, Eu m], and [Lu 1, Eu 1], wherein
Eu 0 is an ambient light brightness within a first ambient light brightness interval, and Lu 0 is a manually-adjusted screen brightness corresponding to Eu 0; Eu m is an ambient light brightness within a second ambient light brightness interval, and Lu m is a manually-adjusted screen brightness corresponding to Eu m; and Eu 1 is an ambient light brightness within a third ambient light brightness interval, and Lu 1 is a manually-adjusted screen brightness corresponding to Eu 1; and
if the record of [Lu m, Eu m] is the latest record, when an absolute value of (Eu m-Eu 1) is greater than an absolute value of (Eu m-Eu 0), the at least two different ambient light brightnesses in the first display scenario and the manually-adjusted screen brightnesses corresponding to the at least two different ambient light brightnesses in the first display scenario comprise [Lu m, Eu m] and [Lu 1, Eu 1]; or when an absolute value of (Eu m-Eu 1) is less than an absolute value of (Eu m-Eu 0), the at least two different ambient light brightnesses in the first display scenario and the manually-adjusted screen brightnesses corresponding to the at least two different ambient light brightnesses in the first display scenario comprise [Lu m, Eu m] and [Lu 0, Eu 0]; or
if the record of [Lu 0, Eu 0] or [Lu 1, Eu 1] is the latest record, the at least two different ambient light brightnesses in the first display scenario and the manually-adjusted screen brightnesses corresponding to the at least two different ambient light brightnesses in the first display scenario comprise [Lu 0, Eu 0] and [Lu 1, Eu 1].

5. The screen brightness adjustment method according to claim 1, wherein the first brightness adjustment rule meets the following formula:

$$L = gain \times f(E) + offset,$$

wherein
E represents an ambient light brightness in the first display scenario, f(x) represents a preset automatic brightness algorithm, f(E) represents an automatic brightness corresponding to E, L represents a screen backlight brightness obtained based on the first brightness adjustment rule in the first display scenario, and gain and offset meet the following formulas:

$$L\,1 = gain \times f(Eu\,1) + offset;$$

and

$$L\,2 = gain \times f(Eu\,2) + offset,$$

wherein
f(x) represents a preset automatic brightness algorithm; Eu 1 represents a first ambient light brightness in the at least two different ambient light brightnesses in the first display scenario, f(Eu 1) represents an automatic brightness corresponding to Eu 1, and L 1 represents a manually-adjusted screen brightness corresponding to Eu 1; and Eu 2 represents a second ambient light brightness in the at least two different ambient light brightnesses in the first display scenario, f(Eu 2) represents an automatic brightness corresponding to Eu 2, and L 2 represents a manually-adjusted screen brightness corresponding to Eu 2.

6. A screen brightness adjustment apparatus, comprising:

a sensor, configured to obtain an ambient light brightness in a first display scenario, wherein the first display scenario comprises any one of a text reading scenario, a video scenario, or a game scenario; and
a processing unit, configured to determine a screen backlight brightness in the first display scenario based on the ambient light brightness and a first brightness adjustment rule, wherein the first brightness adjustment rule is determined based on at least two different ambient light brightnesses in the first display scenario, manually-adjusted screen brightnesses corresponding to the at least two different ambient light brightnesses, and a preset automatic brightness algorithm, wherein
the processing unit is further configured to adjust a screen brightness of an electronic device based on the screen backlight brightness in the first display scenario;
wherein the processing unit is further configured to:

if a variation of the ambient light brightness is less than or equal to a first threshold, when the first display scenario is switched to a second display scenario, determine a screen backlight brightness in the second display scenario based on the ambient light brightness and a second brightness adjustment rule, wherein the second display scenario comprises any one of a text reading scenario, a video scenario, or a game scenario, and the second display scenario is different from the first display scenario; and the second brightness adjustment rule is determined based on at least two different ambient light brightnesses in the second display scenario, manually-adjusted screen brightnesses corresponding to the at least two different ambient light brightnesses in the second display scenario, and the preset automatic brightness algorithm.

7. The screen brightness adjustment apparatus according to claim 6, wherein
an absolute value of a difference between the at least two different ambient light brightnesses in the first display scenario is greater than a second threshold.

8. The screen brightness adjustment apparatus according to claim 6, wherein
the at least two different ambient light brightnesses in the first display scenario and the manually-adjusted screen brightnesses corresponding to the at least two different ambient light brightnesses in the first display scenario fall within different ambient light brightness intervals in N non-overlapping ambient light brightness intervals, wherein N is an integer greater than or equal to 3.

9. The screen brightness adjustment apparatus according to claim 8, wherein the processing unit is further configured to:

in the first display scenario, separately recording an ambient light brightness within each of three non-overlapping ambient light brightness intervals, and a manually-adjusted screen brightness corresponding to the ambient light brightness, comprising [Lu 0, Eu 0], [Lu m, Eu m], and [Lu 1, Eu 1], wherein
Eu 0 is an ambient light brightness within a first ambient light brightness interval, and Lu 0 is a manually-adjusted screen brightness corresponding to Eu 0; Eu m is an ambient light brightness within a second ambient light brightness interval, and Lu m is a manually-adjusted screen brightness corresponding to Eu m; and Eu 1 is an ambient light brightness within a third ambient light brightness interval, and Lu 1 is a manually-adjusted screen brightness corresponding to Eu 1; and
if the record of [Lu m, Eu m] is the latest record, when an absolute value of (Eu m-Eu 1) is greater than an absolute value of (Eu m-Eu 0), the at least two different ambient light brightnesses in the first display scenario and the manually-adjusted screen brightnesses corresponding to the at least two different ambient light brightnesses in the first display scenario comprise [Lu m, Eu m] and [Lu 1, Eu 1]; or when an absolute value of (Eu m-Eu 1) is less than an absolute value of (Eu m-Eu 0), the at least two different ambient light brightnesses in the first display scenario and the manually-adjusted screen brightnesses corresponding to the at least two different ambient light brightnesses in the first display scenario comprise [Lu m, Eu m] and [Lu 0, Eu 0]; or
if the record of [Lu 0, Eu 0] or [Lu 1, Eu 1] is the latest record, the at least two different ambient light brightnesses in the first display scenario and the manually-adjusted screen brightnesses corresponding to the at least two different ambient light brightnesses in the first display scenario comprise [Lu 0, Eu 0] and [Lu 1, Eu 1].

10. The screen brightness adjustment apparatus according to claim 6, wherein the first brightness adjustment rule meets the following formula:

$$L = gain \times f(E) + offset,$$

wherein

E represents an ambient light brightness in the first display scenario, f(x) represents a preset automatic brightness algorithm, f(E) represents an automatic brightness corresponding to E, L represents a screen backlight brightness obtained based on the first brightness adjustment rule in the first display scenario, and gain and offset meet the following formulas:

$$L\ 1 = gain \times f(Eu\ 1) + offset;$$

and

$$L\ 2 = gain \times f(Eu\ 2) + offset,$$

wherein

f(x) represents a preset automatic brightness algorithm; Eu 1 represents a first ambient light brightness in the at least two different ambient light brightnesses in the first display scenario, f(Eu 1) represents an automatic brightness corresponding to Eu 1, and L 1 represents a manually-adjusted screen brightness corresponding to Eu 1; and Eu 2 represents a second ambient light brightness in the at least two different ambient light brightnesses in the first display scenario, f(Eu 2) represents an automatic brightness corresponding to Eu 2, and L 2 represents a manually-adjusted screen brightness corresponding to Eu 2.

11. A computer-readable storage medium, comprising instructions, wherein when the instructions are run on a computer, the computer is enabled to perform the screen brightness adjustment method according to any one of claims 1 to 5.

**Patentansprüche**

1. Verfahren zur Einstellung der Bildschirmhelligkeit, das von einer elektronischen Vorrichtung durchgeführt wird und umfasst:

   Erhalten (402) einer Umgebungslichthelligkeit in einem ersten Anzeigeszenario, wobei das erste Anzeigeszenario ein Textleseszenario, ein Videoszenario oder ein Spielszenario umfasst;
   Bestimmen (403) einer Bildschirmhintergrund-Beleuchtungshelligkeit in dem ersten Anzeigeszenario basierend auf der Umgebungslichthelligkeit und einer ersten Helligkeitseinstellungsregel, wobei die erste Helligkeitseinstellungsregel basierend auf mindestens zwei verschiedenen Umgebungslichthelligkeiten in dem ersten Anzeigeszenario, manuell eingestellten Bildschirmhelligkeiten, die den mindestens zwei verschiedenen Umgebungslichthelligkeiten entsprechen, und einem voreingestellten automatischen Helligkeitsalgorithmus bestimmt wird; und
   Einstellen (404) einer Bildschirmhelligkeit der elektronischen Vorrichtung basierend auf der Bildschirmhintergrund-Beleuchtungshelligkeit in dem ersten Anzeigeszenario;
   wenn eine Variation der Umgebungslichthelligkeit kleiner oder gleich einem ersten Schwellenwert ist, wenn vom ersten Anzeigeszenario zu einem zweiten Anzeigeszenario gewechselt wird, Bestimmen einer Bildschirmhintergrund-Beleuchtungshelligkeit in dem zweiten Anzeigeszenario basierend auf der Umgebungslichthelligkeit und einer zweiten Helligkeitseinstellungsregel, wobei
   das zweite Anzeigeszenario ein Textleseszenario, ein Videoszenario oder ein Spielszenario umfasst und das zweite Anzeigeszenario sich von dem ersten Anzeigeszenario unterscheidet; und wobei die zweite Helligkeitseinstellungsregel basierend auf mindestens zwei verschiedenen Umgebungslichthelligkeiten in dem zweiten Anzeigeszenario, manuell eingestellten Bildschirmhelligkeiten, die den mindestens zwei verschiedenen Umgebungslichthelligkeiten in dem zweiten Anzeigeszenario entsprechen, und dem voreingestellten automatischen Helligkeitsalgorithmus bestimmt wird.

2. Verfahren zur Einstellung der Bildschirmhelligkeit nach Anspruch 1, wobei ein absoluter Wert einer Differenz zwischen den mindestens zwei unterschiedlichen Umgebungslichthelligkeiten in dem ersten Anzeigeszenario größer als ein zweiter Schwellenwert ist.

3. Verfahren zur Einstellung der Bildschirmhelligkeit nach Anspruch 1, wobei die mindestens zwei unterschiedlichen Umgebungslichthelligkeiten in dem ersten Anzeigeszenario und die manuell eingestellten Bildschirmhelligkeiten, die den mindestens zwei unterschiedlichen Umgebungslichthelligkeiten in dem ersten Anzeigeszenario entsprechen, in unterschiedliche Umgebungslichthelligkeitsintervalle in N sich nicht überlappenden Umgebungslichthelligkeitsintervallen fallen, wobei N eine ganze Zahl größer oder gleich 3 ist.

4. Verfahren zur Einstellung der Bildschirmhelligkeit nach Anspruch 3, wobei das Verfahren ferner umfasst:

in dem ersten Anzeigeszenario separates Aufzeichnen einer Umgebungslichthelligkeit innerhalb jedes von drei sich nicht überlappenden Umgebungslichthelligkeitsintervallen und einer manuell eingestellten Bildschirmhelligkeit, die der Umgebungslichthelligkeit entspricht und [Lu 0, Eu 0], [Lu m, Eu m] und [Lu 1, Eu 1] umfasst, wobei Eu 0 eine Umgebungslichthelligkeit innerhalb eines ersten Umgebungslichthelligkeitsintervalls ist und Lu 0 eine manuell eingestellte Bildschirmhelligkeit ist, die Eu 0 entspricht; Eu m eine Umgebungslichthelligkeit innerhalb eines zweiten Umgebungslichthelligkeitsintervalls ist und Lu m eine manuell eingestellte Bildschirmhelligkeit ist, die Eu m entspricht; und Eu 1 eine Umgebungslichthelligkeit innerhalb eines dritten Umgebungslichthelligkeitsintervalls ist und Lu 1 eine manuell eingestellte Bildschirmhelligkeit ist, die Eu 1 entspricht; und
wenn der Datensatz mit [Lu m, Eu m] der neueste Datensatz ist, und wenn ein absoluter Wert von (Eu m-Eu 1) größer als ein absoluter Wert von (Eu m-Eu 0) ist, umfassen die mindestens zwei unterschiedlichen Umgebungslichthelligkeiten in dem ersten Anzeigeszenario und die manuell eingestellten Bildschirmhelligkeiten, die den mindestens zwei unterschiedlichen Umgebungslichthelligkeiten in dem ersten Anzeigeszenario entsprechen, [Lu m, Eu m] und [Lu 1, Eu 1]; oder wenn ein absoluter Wert von (Eu m-Eu 1) kleiner als ein absoluter Wert von (Eu m-Eu 0) ist, umfassen die mindestens zwei unterschiedlichen Umgebungslichthelligkeiten in dem ersten Anzeigeszenario und die manuell eingestellten Bildschirmhelligkeiten, die den mindestens zwei unterschiedlichen Umgebungslichthelligkeiten in dem ersten Anzeigeszenario entsprechen, [Lu m, Eu m] und [Lu 0, Eu 0]; oder
wenn der Datensatz mit [Lu 0, Eu 0] oder [Lu 1, Eu 1] der neueste Datensatz ist, umfassen die mindestens zwei unterschiedlichen Umgebungslichthelligkeiten in dem ersten Anzeigeszenario und die manuell eingestellten Bildschirmhelligkeiten, die den mindestens zwei unterschiedlichen Umgebungslichthelligkeiten in dem ersten Anzeigeszenario entsprechen, [Lu 0, Eu 0] und [Lu 1, Eu 1].

5. Verfahren zur Einstellung der Bildschirmhelligkeit nach Anspruch 1, wobei die erste Helligkeitseinstellungsregel die folgende Formel erfüllt:

$$L = Verstärkung \times f(E) + Versatz,$$

wobei
E die Umgebungslichthelligkeit in dem ersten Anzeigeszenario darstellt, f(x) einen voreingestellten automatischen Helligkeitsalgorithmus darstellt, f(E) eine automatische Helligkeit darstellt, die E entspricht, L eine Bildschirmhintergrund-Beleuchtungshelligkeit darstellt, die basierend auf der ersten Helligkeitseinstellungsregel in dem ersten Anzeigeszenario erhalten wird, und Verstärkung und Versatz die folgenden Formeln erfüllen:

$$L\ 1 = Verstärkung \times f(Eu\ 1) + Versatz;$$

und

$$L\ 2 = Verstärkung \times f(Eu\ 2) + Versatz,$$

wobei
f(x) einen voreingestellten automatischen Helligkeitsalgorithmus darstellt; Eu 1 eine erste Umgebungslichthelligkeit in den mindestens zwei verschiedenen Umgebungslichthelligkeiten in dem ersten Anzeigeszenario darstellt, f(Eu 1) eine automatische Helligkeit darstellt, die Eu 1 entspricht, und L 1 eine manuell eingestellte Bildschirmhelligkeit darstellt, die Eu 1 entspricht; und Eu 2 eine zweite Umgebungslichthelligkeit in den mindestens zwei verschiedenen Umgebungslichthelligkeiten in dem ersten Anzeigeszenario darstellt, f(Eu 2) eine automatische Helligkeit darstellt, die Eu 2 entspricht, und L 2 eine manuell eingestellte Bildschirmhelligkeit darstellt, die Eu 2 entspricht.

6. Vorrichtung zur Einstellung der Bildschirmhelligkeit, umfassend:

einen Sensor, der konfiguriert ist, um eine Umgebungslichthelligkeit in einem ersten Anzeigeszenario zu erhalten, wobei das erste Anzeigeszenario ein Textleseszenario, ein Videoszenario oder ein Spielszenario umfasst; und

eine Verarbeitungseinheit, die konfiguriert ist, um eine Bildschirmhintergrund-Beleuchtungshelligkeit in dem ersten Anzeigeszenario basierend auf der Umgebungslichthelligkeit und einer ersten Helligkeitseinstellungsregel zu bestimmen, wobei die erste Helligkeitseinstellungsregel basierend auf mindestens zwei verschiedenen Umgebungslichthelligkeiten in dem ersten Anzeigeszenario, manuell eingestellten Bildschirmhelligkeiten, die den mindestens zwei verschiedenen Umgebungslichthelligkeiten entsprechen, und einem voreingestellten automatischen Helligkeitsalgorithmus bestimmt wird; wobei

die Verarbeitungseinheit ferner konfiguriert ist, um eine Bildschirmhelligkeit der elektronischen Vorrichtung basierend auf der Bildschirmhintergrund-Beleuchtungshelligkeit in dem ersten Anzeigeszenario einzustellen; wobei die Verarbeitungseinheit ferner konfiguriert ist, um:

wenn eine Variation der Umgebungslichthelligkeit kleiner oder gleich einem ersten Schwellenwert ist, wenn vom ersten Anzeigeszenario zu einem zweiten Anzeigeszenario gewechselt wird, eine Bildschirmhintergrund-Beleuchtungshelligkeit in dem zweiten Anzeigeszenario basierend auf der Umgebungslichthelligkeit und einer zweiten Helligkeitseinstellungsregel zu bestimmen, wobei

das zweite Anzeigeszenario ein Textleseszenario, ein Videoszenario oder ein Spielszenario umfasst und das zweite Anzeigeszenario sich von dem ersten Anzeigeszenario unterscheidet; und wobei die zweite Helligkeitseinstellungsregel basierend auf mindestens zwei verschiedenen Umgebungslichthelligkeiten in dem zweiten Anzeigeszenario, manuell eingestellten Bildschirmhelligkeiten, die den mindestens zwei verschiedenen Umgebungslichthelligkeiten in dem zweiten Anzeigeszenario entsprechen, und dem voreingestellten automatischen Helligkeitsalgorithmus bestimmt wird.

7. Vorrichtung zur Einstellung der Bildschirmhelligkeit nach Anspruch 6, wobei ein absoluter Wert einer Differenz zwischen den mindestens zwei unterschiedlichen Umgebungslichthelligkeiten in dem ersten Anzeigeszenario größer als ein zweiter Schwellenwert ist.

8. Vorrichtung zur Einstellung der Bildschirmhelligkeit nach Anspruch 6, wobei die mindestens zwei unterschiedlichen Umgebungslichthelligkeiten in dem ersten Anzeigeszenario und die manuell eingestellten Bildschirmhelligkeiten, die den mindestens zwei unterschiedlichen Umgebungslichthelligkeiten in dem ersten Anzeigeszenario entsprechen, in unterschiedliche Umgebungslichthelligkeitsintervalle in N sich nicht überlappenden Umgebungslichthelligkeitsintervallen fallen, wobei N eine ganze Zahl größer oder gleich 3 ist.

9. Vorrichtung zur Einstellung der Bildschirmhelligkeit 8, wobei die Verarbeitungseinheit ferner konfiguriert ist zum:

in dem ersten Anzeigeszenario separaten Aufzeichnen einer Umgebungslichthelligkeit innerhalb jedes von drei sich nicht überlappenden Umgebungslichthelligkeitsintervallen und einer manuell eingestellten Bildschirmhelligkeit, die der Umgebungslichthelligkeit entspricht, umfassend [Lu 0, Eu 0], [Lu m, Eu m] und [Lu 1, Eu 1], wobei Eu 0 eine Umgebungslichthelligkeit innerhalb eines ersten Umgebungslichthelligkeitsintervalls ist und Lu 0 eine manuell eingestellte Bildschirmhelligkeit ist, die Eu 0 entspricht; Eu m eine Umgebungslichthelligkeit innerhalb eines zweiten Umgebungslichthelligkeitsintervalls ist und Lu m eine manuell eingestellte Bildschirmhelligkeit ist, die Eu m entspricht; und Eu 1 eine Umgebungslichthelligkeit innerhalb eines dritten Umgebungslichthelligkeitsintervalls ist und Lu 1 eine manuell eingestellte Bildschirmhelligkeit ist, die Eu 1 entspricht; und

wenn der Datensatz mit [Lu m, Eu m] der neueste Datensatz ist, und wenn ein absoluter Wert von (Eu m-Eu 1) größer als ein absoluter Wert von (Eu m-Eu 0) ist, umfassen die mindestens zwei unterschiedlichen Umgebungslichthelligkeiten in dem ersten Anzeigeszenario und die manuell eingestellten Bildschirmhelligkeiten, die den mindestens zwei unterschiedlichen Umgebungslichthelligkeiten in dem ersten Anzeigeszenario entsprechen, [Lu m, Eu m] und [Lu 1, Eu 1]; oder wenn ein absoluter Wert von (Eu m-Eu 1) kleiner als ein absoluter Wert von (Eu m-Eu 0) ist, umfassen die mindestens zwei unterschiedlichen Umgebungslichthelligkeiten in dem ersten Anzeigeszenario und die manuell eingestellten Bildschirmhelligkeiten, die den mindestens zwei unterschiedlichen Umgebungslichthelligkeiten in dem ersten Anzeigeszenario entsprechen, [Lu m, Eu m] und [Lu 0, Eu 0]; oder

wenn der Datensatz mit [Lu 0, Eu 0] oder [Lu 1, Eu 1] der neueste Datensatz ist, umfassen die mindestens zwei unterschiedlichen Umgebungslichthelligkeiten in dem ersten Anzeigeszenario und die manuell eingestellten Bildschirmhelligkeiten, die den mindestens zwei unterschiedlichen Umgebungslichthelligkeiten in dem ersten Anzeigeszenario entsprechen, [Lu 0, Eu 0] und [Lu 1, Eu 1].

10. Vorrichtung zur Einstellung der Bildschirmhelligkeit nach Anspruch 6, wobei die erste Helligkeitseinstellungsregel die folgende Formel erfüllt:

$$L = \text{Verstärkung} \times f(E) + \text{Versatz},$$

wobei
E die Umgebungslichthelligkeit in dem ersten Anzeigeszenario darstellt, f(x) einen voreingestellten automatischen Helligkeitsalgorithmus darstellt, f(E) eine automatische Helligkeit darstellt, die E entspricht, L eine Bildschirmhintergrund-Beleuchtungshelligkeit darstellt, die basierend auf der ersten Helligkeitseinstellungsregel in dem ersten Anzeigeszenario erhalten wird, und Verstärkung und Versatz die folgenden Formeln erfüllen:

$$L\,1 = \text{Verstärkung} \times f(Eu\,1) + \text{Versatz};$$

und

$$L\,2 = \text{Verstärkung} \times f(Eu\,2) + \text{Versatz},$$

wobei
f(x) einen voreingestellten automatischen Helligkeitsalgorithmus darstellt; Eu 1 eine erste Umgebungslichthelligkeit in den mindestens zwei verschiedenen Umgebungslichthelligkeiten in dem ersten Anzeigeszenario darstellt, f(Eu 1) eine automatische Helligkeit darstellt, die Eu 1 entspricht, und L 1 eine manuell eingestellte Bildschirmhelligkeit darstellt, die Eu 1 entspricht; und Eu 2 eine zweite Umgebungslichthelligkeit in den mindestens zwei verschiedenen Umgebungslichthelligkeiten in dem ersten Anzeigeszenario darstellt, f(Eu 2) eine automatische Helligkeit darstellt, die Eu 2 entspricht, und L 2 eine manuell eingestellte Bildschirmhelligkeit darstellt, die Eu 2 entspricht.

11. Computerlesbares Speichermedium, das Anweisungen umfasst, wobei, wenn die Anweisungen auf einem Computer ausgeführt werden, der Computer das Verfahren zum Einstellen der Bildschirmhelligkeit gemäß einem der Ansprüche 1 bis 5 durchführen kann.

**Revendications**

1. Procédé de réglage de luminosité d'écran, effectué dans un dispositif électronique, et comprenant :

l'obtention (402) d'une luminosité de lumière ambiante dans un premier scénario d'affichage, dans lequel le premier scénario d'affichage comprend un scénario quelconque parmi un scénario lecture de texte, un scénario vidéo, ou un scénario jeu ;
la détermination (403) d'une luminosité de rétroéclairage d'écran dans le premier scénario d'affichage sur la base de la luminosité de lumière ambiante et d'une première règle de réglage de luminosité, dans lequel la première règle de réglage de luminosité est déterminée sur la base d'au moins deux luminosités de lumière ambiante différentes dans le premier scénario d'affichage, de luminosités d'écran réglées manuellement correspondant aux au moins deux luminosités de lumière ambiante différentes, et d'un algorithme de luminosité automatique prédéfini ; et
le réglage (404) d'une luminosité d'écran du dispositif électronique sur la base de la luminosité de rétroéclairage d'écran dans le premier scénario d'affichage ;
si une variation de la luminosité de lumière ambiante est inférieure ou égale à un premier seuil, lorsque le premier scénario d'affichage est commuté vers un deuxième scénario d'affichage, la détermination d'une luminosité de rétroéclairage d'écran dans le deuxième scénario d'affichage sur la base de la luminosité de lumière ambiante et d'une deuxième règle de réglage de luminosité, dans lequel
le deuxième scénario d'affichage comprend un scénario quelconque parmi un scénario lecture de texte, un scénario vidéo, ou un scénario jeu, et le deuxième scénario d'affichage est différent du premier scénario d'affichage ; et la deuxième règle de réglage de luminosité est déterminée sur la base d'au moins deux luminosités de lumière ambiante différentes dans le deuxième scénario d'affichage, de luminosités d'écran réglées manuellement correspondant aux au moins deux luminosités de lumière ambiante différentes dans le deuxième scénario d'affichage, et de l'algorithme de luminosité automatique prédéfini.

2. Procédé de réglage de luminosité d'écran selon la revendication 1, dans lequel une valeur absolue d'une différence entre les au moins deux luminosités de lumière ambiante différentes dans le premier scénario d'affichage est supérieure à un deuxième seuil.

3. Procédé de réglage de luminosité d'écran selon la revendication 1, dans lequel les au moins deux luminosités de lumière ambiante différentes dans le premier scénario d'affichage et les luminosités d'écran réglées manuellement correspondant aux au moins deux luminosités de lumière ambiante différentes dans le premier scénario d'affichage tombent à l'intérieur d'intervalles de luminosité de lumière ambiante différents dans N intervalles de luminosité de lumière ambiante non chevauchants, dans lequel N est un nombre entier supérieur ou égal à 3.

4. Procédé de réglage de luminosité d'écran selon la revendication 3, le procédé comprenant en outre :

   dans le premier scénario d'affichage, l'enregistrement de manière séparée d'une luminosité de lumière ambiante à l'intérieur de chacun de trois intervalles de luminosité de lumière ambiante non chevauchants, et d'une luminosité d'écran réglée manuellement correspondant à la luminosité de lumière ambiante, comprenant [Lu 0, Eu 0], [Lu m, Eu m], et [Lu 1, Eu 1], dans lequel
   Eu 0 est une luminosité de lumière ambiante à l'intérieur d'un premier intervalle de luminosité de lumière ambiante, et Lu 0 est une luminosité d'écran réglée manuellement correspondant à Eu 0 ; Eu m est une luminosité de lumière ambiante à l'intérieur d'un deuxième intervalle de luminosité de lumière ambiante, et Lu m est une luminosité d'écran réglée manuellement correspondant à Eu m ; et Eu 1 est une luminosité de lumière ambiante à l'intérieur d'un troisième intervalle de luminosité de lumière ambiante, et Lu 1 est une luminosité d'écran réglée manuellement correspondant à Eu 1 ; et
   si l'enregistrement de [Lu m, Eu m] est le dernier enregistrement, lorsqu'une valeur absolue de (Eu m-Eu 1) est supérieure à une valeur absolue de (Eu m-Eu 0), les au moins deux luminosités de lumière ambiante différentes dans le premier scénario d'affichage et
   les luminosités d'écran réglées manuellement correspondant aux au moins deux luminosités de lumière ambiante différentes dans le premier scénario d'affichage comprennent [Lu m, Eu m] et [Lu 1, Eu 1] ; ou lorsqu'une valeur absolue de (Eu m-Eu 1) est inférieure à une valeur absolue de (Eu m-Eu 0), les au moins deux luminosités de lumière ambiante différentes dans le premier scénario d'affichage et les luminosités d'écran réglées manuellement correspondant aux au moins deux luminosités de lumière ambiante différentes dans le premier scénario d'affichage comprennent [Lu m, Eu m] et [Lu 0, Eu 0] ; ou
   si l'enregistrement de [Lu 0, Eu 0] ou [Lu 1, Eu 1] est le dernier enregistrement, les au moins deux luminosités de lumière ambiante différentes dans le premier scénario d'affichage et les luminosités d'écran réglées manuellement correspondant aux au moins deux luminosités de lumière ambiante différentes dans le premier scénario d'affichage comprennent [Lu 0, Eu 0] ou [Lu 1, Eu 1].

5. Procédé de réglage de luminosité d'écran selon la revendication 1, dans lequel la première règle de réglage de luminosité satisfait la formule suivante :

$$L = gain \times f(E) + décalage,$$

dans lequel
E représente une luminosité de lumière ambiante dans le premier scénario d'affichage, f(x) représente un algorithme de luminosité automatique prédéfini, f(E) représente une luminosité automatique correspondant à E, L représente une luminosité de rétroéclairage d'écran obtenue sur la base de la première règle de réglage de luminosité dans le premier scénario d'affichage, et le gain et le décalage satisfont les formules suivantes :

$$L\,1 = gain \times f(Eu\,1) + décalage\,;$$

et

$$L\,2 = gain \times f(Eu\,2) + décalage,$$

dans lequel
f(x) représente un algorithme de luminosité automatique prédéfini ; Eu 1 représente une première luminosité de lumière ambiante dans les au moins deux luminosités de lumière ambiante différentes dans le premier scénario d'affichage, f(Eu 1) représente une luminosité automatique correspondant à Eu 1, et L 1 représente une luminosité d'écran réglée manuellement correspondant à Eu 1 ; et Eu 2 représente une deuxième luminosité de lumière ambiante dans les au moins deux luminosités de lumière ambiante différentes dans le premier scénario d'affichage, f(Eu 2) représente une luminosité automatique correspondant à Eu 2, et L 2 représente une luminosité d'écran réglée manuellement correspondant à Eu 2.

6. Appareil de réglage de luminosité d'écran, comprenant :

un capteur, configuré pour obtenir une luminosité de lumière ambiante dans un premier scénario d'affichage, dans lequel le premier scénario d'affichage comprend un scénario quelconque parmi un scénario lecture de texte, un scénario vidéo, ou un scénario jeu ; et
une unité de traitement, configurée pour déterminer une luminosité de rétroéclairage d'écran dans le premier scénario d'affichage sur la base de la luminosité de lumière ambiante et d'une première règle de réglage de luminosité, dans lequel la première règle de réglage de luminosité est déterminée sur la base d'au moins deux luminosités de lumière ambiante différentes dans le premier scénario d'affichage, de luminosités d'écran réglées manuellement correspondant aux au moins deux luminosités de lumière ambiante différentes, et d'un algorithme de luminosité automatique prédéfini, dans lequel
l'unité de traitement est en outre configurée pour régler une luminosité d'écran d'un dispositif électronique sur la base de la luminosité de rétroéclairage d'écran dans le premier scénario d'affichage ;
dans lequel l'unité de traitement est en outre configurée pour :

si une variation de la luminosité de lumière ambiante est inférieure ou égale à un premier seuil, lorsque le premier scénario d'affichage est commuté vers un deuxième scénario d'affichage, déterminer une luminosité de rétroéclairage d'écran dans le deuxième scénario d'affichage sur la base de la luminosité de lumière ambiante et d'une deuxième règle de réglage de luminosité, dans lequel
le deuxième scénario d'affichage comprend un scénario quelconque parmi un scénario lecture de texte, un scénario vidéo, ou un scénario jeu, et le deuxième scénario d'affichage est différent du premier scénario d'affichage ; et la deuxième règle de réglage de luminosité est déterminée sur la base d'au moins deux luminosités de lumière ambiante différentes dans le deuxième scénario d'affichage, de luminosités d'écran réglées manuellement correspondant aux au moins deux luminosités de lumière ambiante différentes dans le deuxième scénario d'affichage, et de l'algorithme de luminosité automatique prédéfini.

7. Appareil de réglage de luminosité d'écran selon la revendication 6, dans lequel une valeur absolue d'une différence entre les au moins deux luminosités de lumière ambiante différentes dans le premier scénario d'affichage est supérieure à un deuxième seuil.

8. Appareil de réglage de luminosité d'écran selon la revendication 6, dans lequel les au moins deux luminosités de lumière ambiante différentes dans le premier scénario d'affichage et les luminosités d'écran réglées manuellement correspondant aux au moins deux luminosités de lumière ambiante différentes dans le premier scénario d'affichage tombent à l'intérieur d'intervalles de luminosité de lumière ambiante différents dans N intervalles de luminosité de lumière ambiante non chevauchants, dans lequel N est un nombre entier supérieur ou égal à 3.

9. Appareil de réglage de luminosité d'écran selon la revendication 8, dans lequel l'unité de traitement est en outre configurée pour :

dans le premier scénario d'affichage, enregistrer de manière séparée une luminosité de lumière ambiante à l'intérieur de chacun de trois intervalles de luminosité de lumière ambiante non chevauchants, et une luminosité d'écran réglée manuellement correspondant à la luminosité de lumière ambiante, comprenant [Lu 0, Eu 0], [Lu m, Eu m], et [Lu 1, Eu 1], dans lequel
Eu 0 est une luminosité de lumière ambiante à l'intérieur d'un premier intervalle de luminosité de lumière ambiante, et Lu 0 est une luminosité d'écran réglée manuellement correspondant à Eu 0 ; Eu m est une luminosité de lumière ambiante à l'intérieur d'un deuxième intervalle de luminosité de lumière ambiante, et Lu m est une luminosité d'écran réglée manuellement correspondant à Eu m ; et Eu 1 est une luminosité de lumière ambiante à l'intérieur d'un troisième intervalle de luminosité de lumière ambiante, et Lu 1 est une luminosité d'écran réglée manuellement correspondant à Eu 1 ; et
si l'enregistrement de [Lu m, Eu m] est le dernier enregistrement, lorsqu'une valeur absolue de (Eu m-Eu 1) est supérieure à une valeur absolue de (Eu m-Eu 0), les au moins deux luminosités de lumière ambiante différentes dans le premier scénario d'affichage et les luminosités d'écran réglées manuellement correspondant aux au moins deux luminosités de lumière ambiante différentes dans le premier scénario d'affichage comprennent [Lu m, Eu m] et [Lu 1, Eu 1] ; ou lorsqu'une valeur absolue de (Eu m-Eu 1) est inférieure à une valeur absolue de (Eu m-Eu 0), les au moins deux luminosités de lumière ambiante différentes dans le premier scénario d'affichage et les luminosités d'écran réglées manuellement correspondant aux au moins deux luminosités de lumière ambiante différentes dans le premier scénario d'affichage comprennent [Lu m, Eu m] et [Lu 0, Eu 0] ; ou si l'enregistrement de [Lu 0, Eu 0] ou [Lu 1, Eu 1] est le dernier enregistrement, les au moins deux luminosités de lumière ambiante différentes dans le premier scénario d'affichage et les luminosités d'écran réglées manuellement correspondant aux au moins deux luminosités de lumière ambiante différentes dans le premier scénario d'affichage comprennent [Lu 0, Eu 0] ou [Lu 1, Eu 1].

10. Appareil de réglage de luminosité d'écran selon la revendication 6, dans lequel la première règle de réglage de luminosité satisfait la formule suivante :

$$L = gain \times f(E) + décalage,$$

dans lequel
E représente une luminosité de lumière ambiante dans le premier scénario d'affichage, f(x) représente un algorithme de luminosité automatique prédéfini, f(E) représente une luminosité automatique correspondant à E, L représente une luminosité de rétroéclairage d'écran obtenue sur la base de la première règle de réglage de luminosité dans le premier scénario d'affichage, et le gain et le décalage satisfont les formules suivantes :

$$L\,1 = gain \times f(Eu\,1) + décalage\;;$$

et

$$L\,2 = gain \times f(Eu\,2) + décalage,$$

dans lequel
f(x) représente un algorithme de luminosité automatique prédéfini ; Eu 1 représente une première luminosité de lumière ambiante dans les au moins deux luminosités de lumière ambiante différentes dans le premier scénario d'affichage, f(Eu 1) représente une luminosité automatique correspondant à Eu 1, et L 1 représente une luminosité d'écran réglée manuellement correspondant à Eu 1 ; et Eu 2 représente une deuxième luminosité de lumière ambiante dans les au moins deux luminosités de lumière ambiante différentes dans le premier scénario d'affichage, f(Eu 2) représente une luminosité automatique correspondant à Eu 2, et L 2 représente une luminosité d'écran réglée manuellement correspondant à Eu 2.

11. Support de stockage lisible par ordinateur, comprenant des instructions dans lequel lorsque les instructions sont exécutées sur un ordinateur, l'ordinateur est activé pour réaliser le procédé de réglage de luminosité d'écran selon l'une quelconque des revendications 1 à 5.

FIG. 1

FIG. 2

Electronic device 100

Antenna 1

Antenna 2

| Mobile communications module<br>2G/3G/4G/5G<br>[450] | Wireless communications module<br>BT/WLAN/GNSS/NFC/IR/FM<br>[460] |

Speaker [470A]

Receiver [470B]

Microphone [470C]

Headset jack [470D]

Audio module [470]

Display [494]

Cameras 1 to N [493]

Indicator [492]

Motor [491]

Button [490]

Internal memory [421]

SIM card interfaces 1 to N [495]

External memory interface [420]

USB port [430]

Charging input

Charging management module [440]

Power management module [441]

Battery [442]

Processor [410]

Sensor module [480]

Pressure sensor [480A]

Gyroscope sensor [480B]

Barometric pressure sensor [480C]

Magnetic sensor [480D]

Acceleration sensor [480E]

Range sensor [480F]

Optical proximity sensor [480G]

Fingerprint sensor [480H]

Temperature sensor [480J]

Touch sensor [480K]

Ambient light sensor [480L]

Bone conduction sensor [480M]

FIG. 3

401: A mobile phone determines a plurality of display scenarios and brightness adjustment rules corresponding to the plurality of display scenarios

↓

402: Obtain an ambient light brightness in a first display scenario

↓

403: Determine a screen backlight brightness in the first display scenario based on the ambient light brightness and a first brightness adjustment rule

↓

404: Adjust a screen backlight brightness of an electronic device based on the screen backlight brightness in the first display scenario

FIG. 4

Hot News

⟳ ⎯⎯⎯⎯ 501

Focus  Recommendation  Hotspot  Video  ≡

Five national football team players
successfully naturalized

China's latest financial opening-up plan
released, exceeding expectations

***: Build a world-class navy in an
all-around way

China's latest financial opening-up
plan released, exceeding expectations

Strong attack from typhoon Mangkhut

⌂

Home

Short video

FIG. 5

○ ⬭⬭⬭⬭⬭⬭⬭⬭⬭

4G ᵢₗᵢₗ ▢ ⯈ 09:06 — 601

❯ Display

Brightness — 602

Text size ❯

Text style ❯

Indicator ❯

Sleep ❯

Eye comfort ❯

...

FIG. 6(a)

FIG. 6(b)

FIG. 7

FIG. 8

EP 4 087 224 B1

9

Electronic device

Sensor 901

Processing unit 902

FIG. 9

Chip system

Processor 1001

Processor 1001

Interface circuit

Interface circuit

1002

1002

FIG. 10

34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013328842 A1